# EUROPEAN PATENT APPLICATION

(11) **EP 4 841 626 A1**
(43) Date of publication of application: **18.11.2026**
(21) Application number: 25802568.3
(22) Date of filing: 14.04.2025
(51) Int. Cl.: G10L 15/24, G06V 10/82, G06V 40/20, G10L 15/06, G10L 15/16, G10L 15/25, G10L 15/065

(54) **TRAINING AND SPEECH GENERATION METHODS AND APPARATUSES FOR SPEECH GENERATION MODEL, ELECTRONIC DEVICE, COMPUTER-READABLE STORAGE MEDIUM, AND COMPUTER PROGRAM PRODUCT**

(30) Priority: 15.05.2024 CN 202410626872
(71) Applicant: Tencent Technology (Shenzhen) Company Limited, Shenzhen, Guangdong 518057 (CN)
(72) Inventor: WANG, Jun, Shenzhen, Guangdong 518057 (CN)
(74) Representative: Nederlandsch Octrooibureau
(86) International application number: PCT/CN2025/088811
(87) International publication number: WO 2025/236958

(57) **Abstract**

The present application provides training and speech generation methods and apparatuses for a speech generation model, an electronic device, a computer-readable storage medium, and a computer program product The method comprises: obtaining a first speech generation model; obtaining sample data of a plurality of modalities; on the basis of a prompt image sequence and speech text, respectively calling a plurality of encoders to perform encoding, so as to obtain a multi-modal encoding vector sequence; on the basis of the multi-modal encoding vector sequence, calling a decoder to perform decoding, so as to obtain decoded text; determining a probability distribution for the decoded text and the sample data of the plurality of modalities, and determining a target loss on the basis of the probability distribution; and on the basis of the target loss, updating parameters of the decoder and at least one of the encoders, wherein the updated decoder and the plurality of updated encoders are configured to form a second speech generation model, and the second speech generation model is used to generate target speech text corresponding to a prompt image sequence of a target object.

## Description

### CROSS-REFERENCE TO RELATED APPLICATION

This application claims priority to Chinese Patent Application No. 2024106268722 filed on May 15, 2024, which is incorporated herein by reference in its entirety.

### FIELD

This application relates to artificial intelligence technologies, and in particular, to a method for training a speech generation model, a speech generation method, an apparatus, an electronic device, a computer-readable storage medium, and a computer program product.

### BACKGROUND

In interpersonal communication or in scenarios requiring a human-computer interaction process, when a target object cannot directly express their intention by way of speech (for example, due to limitations of a current scenario or because a user has a physiological disorder that affects vocalization), related technologies support the user in expressing their intention by way of body movements and mouth shapes, or by inputting text into a terminal device. For example, in related technologies, speech text can be generated by encoding hand movements and lip movements of a target object. However, the speech text generated by the related technologies is insufficiently accurate and convenient, resulting in a poor user experience.

### SUMMARY

In view of this, embodiments of this application provide a method for training a speech generation model, a speech generation method, an apparatus, an electronic device, a computer-readable storage medium, and a computer program product, which can improve an efficiency and an accuracy of generating speech text from a cued speech image.

Technical solutions of the embodiments of this application are implemented in the following modes.

An embodiment of this application provides a method for training a speech generation model, the method being performed by an electronic device, and the method including:
acquiring a first speech generation model, the first speech generation model including a decoder and a plurality of encoders respectively corresponding to a plurality of modalities;
acquiring sample data of the plurality of modalities, the sample data of the plurality of modalities including a cued speech image sequence of a sample object and speech text corresponding to the cued speech image sequence;
invoking the plurality of encoders respectively for encoding based on the cued speech image sequence and the speech text to obtain a multimodal encoding vector sequence;
invoking the decoder for decoding based on the multimodal encoding vector sequence to obtain decoded text;
determining probability distributions of the decoded text and the sample data of the plurality of modalities, and determining a target loss based on the probability distributions; and
updating parameters of the decoder and at least one of the encoders based on the target loss to obtain an updated decoder and a plurality of updated encoders, the updated decoder and the plurality of updated encoders being configured to form a second speech generation model, and the second speech generation model being configured to generate target speech text corresponding to a cued speech image sequence of a target object.

An embodiment of this application provides a speech generation method for a speech generation model, the speech generation model being the second speech generation model described above, the method being performed by an electronic device, and the method including:
acquiring a cued speech image sequence of a target object; and
invoking, based on the cued speech image sequence, the second speech generation model to generate target speech text corresponding to the cued speech image sequence of the target object.

An embodiment of this application provides an apparatus for training a speech generation model, the apparatus including:
an acquisition module, configured to acquire a first speech generation model, the first speech generation model including a decoder and a plurality of encoders respectively corresponding to a plurality of modalities; and acquire sample data of the plurality of modalities, the sample data of the plurality of modalities including a cued speech image sequence of a sample object and speech text corresponding to the cued speech image sequence;
an encoding module, configured to invoke the plurality of encoders respectively for encoding based on the cued speech image sequence and the speech text to obtain a multimodal encoding vector sequence;
a decoding module, configured to invoke the decoder for decoding based on the multimodal encoding vector sequence to obtain decoded text;
a determination module, configured to determine probability distributions of the decoded text and the sample data of the plurality of modalities, and determine a target loss based on the probability distributions; and
a generation module, configured to update parameters of the decoder and at least one of the encoders based on the target loss to obtain an updated decoder and a plurality of updated encoders, the updated decoder and the plurality of updated encoders being configured to form a second speech generation model, and the second speech generation model being configured to generate target speech text corresponding to a cued speech image sequence of a target object.

An embodiment of this application provides a speech generation apparatus for a speech generation model, the speech generation model being the second speech generation model described above, and the apparatus including:
an acquisition module, configured to acquire a cued speech image sequence of a target object; and
a generation module, configured to invoke, based on the cued speech image sequence, the second speech generation model to generate target speech text corresponding to the cued speech image sequence of the target object.

An embodiment of this application provides an electronic device, the electronic device including:
a memory, configured to store computer-executable instructions; and
a processor, configured to, when executing the computer-executable instructions stored in the memory, implement the method for training the speech generation model or the speech generation method for the speech generation model according to the embodiment of this application.

An embodiment of this application provides a computer-readable storage medium, having a computer program or computer-executable instructions stored therein, the computer program or the computer-executable instructions, when executed by a processor, implementing the method for training the speech generation model or the speech generation method for the speech generation model according to the embodiment of this application.

An embodiment of this application provides a computer program product, including a computer program or computer-executable instructions, the computer program or the computer-executable instructions, when executed by a processor, implementing the method for training the speech generation model or the speech generation method for the speech generation model according to the embodiment of this application.

The embodiments of this application have the following beneficial effects.

By encoding sample data of a plurality of modalities including a cued speech image sequence (corresponding to a visual modality) and speech text (corresponding to a text modality), and calculating a target loss using probability distributions of an obtained multimodal encoding vector sequence (i.e., encoding vector sequences of the plurality of modalities) and the decoded text, the target loss can reflect differences among representation spaces of the plurality of modalities in the first speech generation model. Parameters of the first speech generation model are updated through backpropagation based on the target loss, so that the first speech generation model can gradually learn intrinsic correlations between information of the visual modality and information of the text modality, thereby improving performance and generalization capability of the model. As a result, unification of the representation spaces of the visual modality and the text modality is achieved in the second speech generation model obtained after training. This means that the second speech generation model can map data of different modalities into a common representation space, such that data of different modalities have similar semantic expressions in the space, laying a foundation for subsequent accurate speech text generation, and ensuring that the target speech text outputted by the second speech generation model can accurately conform to an intention expressed by the cued speech image of the target object, thereby ensuring an accuracy of generating speech text from a cued speech image. Meanwhile, compared with related technologies that require manual text input to generate speech text, the present solution is more convenient and efficient, and provides a better user experience.

### BRIEF DESCRIPTION OF THE DRAWINGS

FIG. 1 is a schematic architectural diagram of a system 100 for training a speech generation model provided by an embodiment of this application.
FIG. 2A is a schematic structural diagram of an electronic device 500-1 provided by an embodiment of this application.
FIG. 2B is a schematic structural diagram of an electronic device 500-2 provided by an embodiment of this application.
FIG. 3A is a schematic flowchart of a method for training a speech generation model provided by an embodiment of this application.
FIG. 3B is a first schematic flowchart of obtaining a multimodal encoding vector sequence provided by an embodiment of this application.
FIG. 3C is a schematic flowchart of obtaining a visual encoding vector sequence provided by an embodiment of this application.
FIG. 3D is a second schematic flowchart of obtaining a multimodal encoding vector sequence provided by an embodiment of this application.
FIG. 3E is a third schematic flowchart of obtaining a multimodal encoding vector sequence provided by an embodiment of this application.
FIG. 3F is a fourth schematic flowchart of obtaining a multimodal encoding vector sequence provided by an embodiment of this application.
FIG. 3G is a schematic flowchart of length alignment of encoding vector sequences provided by an embodiment of this application.
FIG. 3H is a first schematic flowchart of determining probability distributions provided by an embodiment of this application.
FIG. 3I is a first schematic flowchart of determining a target loss provided by an embodiment of this application.
FIG. 3J is a second schematic flowchart of determining probability distributions provided by an embodiment of this application.
FIG. 3K is a second schematic flowchart of determining a target loss provided by an embodiment of this application.
FIG. 3L is a third schematic flowchart of determining probability distributions provided by an embodiment of this application.
FIG. 3M is a third schematic flowchart of determining a target loss provided by an embodiment of this application.
FIG. 3N is a first schematic flowchart of updating parameters provided by an embodiment of this application.
FIG. 3O is a second schematic flowchart of updating parameters provided by an embodiment of this application.
FIG. 3P is a third schematic flowchart of updating parameters provided by an embodiment of this application.
FIG. 3Q is a schematic flowchart of a speech generation method for a speech generation model provided by an embodiment of this application.
FIG. 4A is a first schematic architectural diagram of a speech generation model provided by an embodiment of this application.
FIG. 4B is a second schematic architectural diagram of a speech generation model provided by an embodiment of this application.
FIG. 4C is a third schematic architectural diagram of a speech generation model provided by an embodiment of this application.
FIG. 5A is a schematic structural diagram of a visual encoder model provided by an embodiment of this application.
FIG. 5B is a schematic structural diagram of a machine learning model provided by an embodiment of this application.
FIG. 6 is a schematic diagram of encoding vector sequence alignment provided by an embodiment of this application.
FIG. 7 is a schematic diagram of cued speech encoding information provided by an embodiment of this application.
FIG. 8 is a schematic diagram of training data provided by an embodiment of this application.
FIG. 9 is an architectural diagram of a visual encoding model provided by an embodiment of this application.

The terms "first", "second" described above are only used to distinguish between different solutions, and are not intended to indicate a degree of superiority of the solutions or a priority in implementation.

### DESCRIPTION OF EMBODIMENTS

In order to make the objectives, technical solutions, and advantages of this application clearer, this application is further described in detail below with reference to the accompanying drawings. The described embodiments are not to be construed as limiting this application. All other embodiments obtained by a person skilled in the art without making creative efforts fall within the scope of protection of this application.

In the following descriptions, "some embodiments" involved describe a subset of all possible embodiments. However, "some embodiments" may be the same subset or different subsets of all possible embodiments, and may be combined with each other without conflict.

In the following description, the terms "first", "second", and "third" are only used to distinguish between similar objects and do not denote a specific order of the objects. Where permitted, the specific order or sequence indicated by "first", "second", and "third" may be interchanged, so that the embodiments of this application described herein may be implemented in an order other than that illustrated or described herein.

In the embodiments of this application, the term "module" or "unit" refers to a computer program having a predetermined function or a part of a computer program, and works together with other relevant parts to achieve a predetermined objective, and may be all or partially implemented by using software, hardware (such as a processing circuit or a memory), or a combination thereof. Similarly, one processor (or a plurality of processors or memories) may be configured to implement one or more modules or units. In addition, each module or unit may be a part of an overall module or unit including a function of the module or unit.

Unless otherwise specified, "at least one" as described hereinafter refers to one or more, and "a plurality of" may refer to two or more.

Unless otherwise defined, all technical and scientific terms used in the embodiments of this application have the same meanings as commonly understood by a person skilled in the art to which this application belongs. The terms used in the embodiments of this application are only for the purpose of describing the embodiments of this application, and are not intended to limit this application.

When related data collection and processing are applied in examples in the embodiments of this application, the collection and processing shall be strictly in compliance with requirements of relevant laws and regulations, the informed consent or separate consent of the personal information subject shall be obtained, and subsequent data use and processing shall be carried out within the scope authorized by laws and regulations and the personal information subject.

Before further detailed description of the embodiments of this application, the nouns and terms involved in the embodiments of this application are explained, and the nouns and terms involved in the embodiments of this application are subject to the following explanations.
1) Speech generation model: it includes a decoder and a plurality of encoders respectively corresponding to a plurality of modalities, is trained based on sample data of the plurality of modalities of a sample object, and is configured to generate target speech text corresponding to a visual expression of a target object.
2) Visual modality: it enables a viewer to obtain emotional states and intentions of a target object by perceiving and understanding visual expressions of the target object, such as facial expressions, eye gaze, and body language, through intuitive modes such as hand movements, lip movements, and body movements. For example, for a cued speech image sequence of a target object, each cued speech image in the cued speech image sequence is a static image showing a posture of a hand or a lip of a sample object when the sample object performs a body movement or a lip movement. Each cued speech image indicates postures and relative positions of the hand and the lip of the target object when performing a key action.
3) Text modality: it is an expression in text form for expressing emotional states and intentions of a target object, for example, "It's a nice day today."
4) Speech modality: it is an expression in speech signal form for expressing emotional states and intentions of a target object.
5) Multimodal encoding vector sequence: it is an encoding vector sequence obtained by invoking encoders respectively corresponding to a plurality of modalities in a speech generation model to encode sample data of the plurality of modalities respectively, and using the obtained encoding vector sequences of the plurality of modalities as the multimodal encoding vector sequence.
6) Representation space: it refers to a vector space including feature vectors or feature representations, and is used to describe and represent different attributes, features, or information of data. In different modalities, a representation space reflects features of different types of data and their representations in the vector space. For example, a representation space of a visual modality is a vector space including visual feature vectors, and a representation space of a text modality is a vector space including text feature vectors.
7) Cued speech (CS): it is a coding system used by persons who are unable to speak or have impaired speech to express spoken language.
8) Sign language (SL): it is a language form for communication and interaction through gestures, hand movements, and facial expressions. It uses gestures and hand movements to represent words, phrases, and sentences, and uses different shapes, positions, and movements of fingers, palms, wrists, or the like in coordination with facial expressions and body movements.
9) Impaired speech (IS): it refers to speech signals whose quality is degraded or which are difficult to understand due to various reasons. For example, when noise is mixed with a speech signal, the speech quality may be degraded, making it difficult to clearly hear and understand the speech content; when a speech signal is deformed or damaged during transmission, recording, or processing, it may cause spectral distortion, time-domain distortion, distortion impact, or the like, making the speech sound unnatural or distorted; and for persons with speech disorders or articulation impairments due to physiological or neurological reasons, the speech may become difficult or impossible to understand due to unclear articulation, abnormal speaking rate, unstable pitch, or the like.
10) Knowledge distillation (KD): it is a model training technique for transferring knowledge from a teacher model to a student model to assist the student model in learning and improving its performance. In knowledge distillation, the teacher model is typically a complex and accurate model with good performance, while the student model is a lightweight model that is often unable to achieve the complexity of the teacher model due to limitations in computational resources or model scale. For example, in the embodiments of this application, an output of a visual encoder is aligned to a feature space of an output of a text encoder by way of knowledge distillation, i.e., a model of the text encoder is used as a teacher model, a model of the visual encoder is used as a student model, and the text encoder is used to guide the visual encoder.
11) Cued speech image sequence: a cued speech image sequence includes a plurality of cued speech images. For each cued speech image, postures and positions of limbs, lips, or hands of a target object when performing a body movement, a lip movement, or a hand movement are indicated.
12) Key point sequence: in each cued speech image of a cued speech image sequence, points indicating postures and positions of limbs, lips, or hands are taken as key points. The key points in each cued speech image in the cued speech image sequence are combined in an order in which actions occur to obtain a key point sequence.

In related technologies, speech text is generated by encoding hand movements and lip movements of a target object. However, the mode of generating speech text by encoding is only applicable to users who understand the encoding mode, and has a limited scope of application. Moreover, the expression of the generated speech text is less accurate and natural compared with normal communication modes. The mode of completing an interaction process by manually inputting text by a user is less convenient, has low efficiency, and provides a poor user experience.

In view of the above problems, embodiments of this application provide a method and apparatus for training a speech generation model, an electronic device, a computer-readable storage medium, and a computer program product, which can improve the efficiency and accuracy of generating speech text from a cued speech image.

Exemplary applications of the electronic device provided in the embodiment of this application are described below. The electronic device provided in the embodiment of this application may be implemented as various types of terminals such as a laptop computer, a tablet computer, a desktop computer, a set-top box, a smartphone, a smart speaker, a smart watch, a smart television, and a vehicle-mounted terminal, or may be implemented as a server. Exemplary applications when the electronic device is implemented as a terminal or a server will be described below.

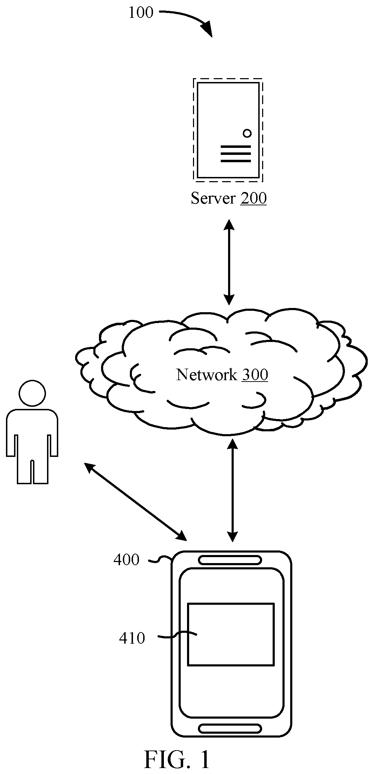

Referring to FIG. 1, FIG. 1 is a schematic architectural diagram of a training system 100 for a speech generation model according to an embodiment of this application. To support a training application for a speech generation model, a terminal 400 (exemplarily showing a graphical interface 410) is connected to a server 200 through a network 300. The network 300 may be a wide area network or a local area network, or a combination thereof.

The methods provided in the embodiments of this application can be applied to the following several different scenarios, which can improve a user's interactive experience, enhance the flexibility and convenience of human-computer interaction, and help to achieve more intelligent and personalized human-computer interaction.
1. Assistive communication: for persons with hearing or language impairments, recognition of body movements and mouth shapes can help them communicate and interact with others. For example, the terminal 400 acquires a cued speech image sequence of a person with hearing or language impairments and transmits it to the server 200. The server 200 recognizes finger positions, gesture shapes, and movement trajectories in the cued speech image sequence, translates the sign language of the person with hearing or language impairments into text or speech, and transmits the translated text or speech to the terminal 400 to be displayed to a target audience. In this way, persons with hearing or language impairments can communicate with others in real time through gestures.
2. Gesture control: body movement and gesture recognition can be applied in smart devices or wearable devices, allowing a user to control functions of a device through gestures, such as adjusting volume, switching songs, etc. For example, the terminal 400 detects a body movement of a user and transmits it to the server 200. The server 200 recognizes an upward (or downward) arm swipe or an increase (or decrease) in palm height in the body movement of the user, determines a corresponding increase (or decrease) in volume, and transmits the determined adjustment to the terminal 400, so that the volume is increased (or decreased) through the terminal 400.
3. Expression recognition: by recognizing facial expressions and mouth shapes, a user's emotional state and intentions can be determined, thereby providing a better user experience and personalized services, such as automated sentiment analysis, emotional interaction in games, etc. For example, in a game, the terminal 400 may acquire facial expression change data of a player and transmit it to the server 200. The server 200 processes the facial expression change data of the player to obtain a cued speech image sequence, and decodes the cued speech image sequence to obtain target intention data of the player, and transmits the target intention data to the terminal 400, so that the terminal 400 adjusts game difficulty, provides corresponding props, or changes a storyline according to the target intention data, thereby providing a more challenging and personalized gaming experience.
4. Virtual reality and augmented reality: by recognizing body movements and mouth shapes, a user's actions and expressions can be transmitted in real time to a virtual reality or augmented reality environment, achieving a more immersive interactive experience, such as body movement imitation of a virtual character, etc. For example, the terminal 400 acquires a cued speech image sequence of a user and transmits it to the server 200. The server 200 recognizes body movements and mouth shapes of the user to determine a target intention of the user, and transmits the target intention to the terminal 400. The terminal 400, according to the target intention of the user, maps the user's actions and expressions in real time to a virtual character or a virtual scene, so that during a performance or show, an actor or artist can control actions and interactions of the virtual character through their own actions and expressions, making the augmented reality experience more vivid.
5. Intelligent driving assistance: by recognizing a driver's body movements and mouth shapes, abnormal states of the driver can be detected in a timely mode, thereby improving driving safety. For example, a terminal 400 (e.g., an in-vehicle camera) acquires a cued speech image sequence of a driver during driving (e.g., yawning, frequent blinking, hands leaving the steering wheel, etc.) and transmits it to a server 200. The server 200 recognizes the cued speech image sequence to determine whether the driver is fatigued or distracted. For example, recognizing that the driver is blinking frequently indicates fatigue, and it generates alarm information and transmits it to the terminal 400. The terminal 400 reminds the driver to take a rest or take corresponding safety measures according to the alarm information, such as playing an alarm sound, displaying rest prompt information, etc.
6. Medical rehabilitation and assistive therapy: according to a patient's body movements and mouth shapes, the patient's rehabilitation progress can be detected, assisting a doctor in diagnosis and treatment. For example, a terminal 400 acquires a cued speech image sequence of a patient during rehabilitation training (e.g., amplitude, frequency of body movements) and transmits it to a server 200. The server 200 recognizes the cued speech image sequence to analyze the patient's rehabilitation status. For example, recognizing that the amplitude of the patient's body movements is gradually increasing indicates a good rehabilitation effect, and it generates an evaluation report and transmits it to the terminal 400. The terminal 400 displays the evaluation report to the doctor and the patient. The doctor can adjust a rehabilitation plan according to the report, and the patient can learn about his or her own rehabilitation progress.
7. Smart home control: in a smart home environment, a user can control various devices in the home, such as lights, curtains, home appliances, through body movements and mouth shapes, thereby improving the convenience of daily life. For example, a terminal 400 (e.g., a smart camera) acquires a cued speech image sequence of a user (e.g., actions such as waving an arm, opening the mouth, etc.) and transmits it to a server 200. The server 200 recognizes the user's body movements and mouth shapes to determine the user's operation intention. For example, recognizing that the user's action of waving an arm indicates an instruction to open a curtain, it generates a corresponding control instruction and transmits it to the terminal 400. The terminal 400 operates smart home devices according to the control instruction, such as opening a curtain, adjusting a light brightness, etc.

The terminal 400 is configured to transmit, to the server 200 via the network 300, sample data of a plurality of modalities including a cued speech image sequence of a sample object and speech text corresponding to the cued speech image sequence, as well as a cued speech image sequence of a target object. The server 200 invokes a plurality of encoders respectively corresponding to a plurality of modalities in the first speech generation model to encode the received sample data of the plurality of modalities of the sample object to obtain a multimodal encoding vector sequence, and invokes a decoder in the first speech generation model to decode the multimodal encoding vector sequence to obtain decoded text; then, it determines probability distributions of the decoded text and the sample data of the plurality of modalities, and determines a target loss based on the probability distributions; it updates parameters of the decoder and at least one of the encoders based on the target loss to obtain a second speech generation model; and finally, the server 200 invokes the second speech generation model to generate target speech text corresponding to the cued speech image sequence of the target object, and delivers the target speech text to the terminal 400 via the network 300 to be displayed through the graphical interface 410, and meanwhile, the target speech text passes through a speech signal generator of the second speech generation model to generate corresponding speech information, which is played back on the terminal.

In some embodiments, the terminal 400 invokes a plurality of encoders respectively corresponding to a plurality of modalities in the first speech generation model to encode received sample data of a plurality of modalities of a sample object, to obtain a multimodal encoding vector sequence, and invokes a decoder in the first speech generation model to decode the multimodal encoding vector sequence, to obtain decoded text; then, it determines probability distributions of the decoded text and the sample data of the plurality of modalities, and determines a target loss based on the probability distributions; it updates parameters of the decoder and at least one of the encoders based on the target loss to obtain a second speech generation model; and finally, it invokes the second speech generation model to generate target speech text corresponding to the cued speech image sequence of the target object, and displays the target speech text through the graphical interface 410, and meanwhile, the target speech text passes through a speech signal generator of the second speech generation model to generate corresponding speech information, which is played back on the terminal.

In some embodiments, the server 200 may be an independent physical server, or may be a server cluster including a plurality of physical servers or a distributed system, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform. The terminal and the server may be connected directly or indirectly through wired or wireless communication, which is not limited in the embodiment of this application.

The embodiments of this application may be implemented by way of artificial intelligence technologies. Artificial intelligence (AI) involves a theory, a method, a technology, and an application system that use a digital computer or a machine controlled by the digital computer to simulate, extend, and expand human intelligence, perceive an environment, obtain knowledge, and use the knowledge to obtain an optimal result. In other words, AI is a comprehensive technology in computer science that attempts to understand the essence of intelligence and to produce a new type of intelligent machine capable of responding in a mode similar to human intelligence. AI is to study the design principles and implementation methods of various intelligent machines, to enable the machines to have the functions of perception, reasoning, and decision-making.

AI technology is a comprehensive discipline, and relates to a wide range of fields including both hardware-level technologies and software-level technologies. Basic AI technologies generally include, for example, sensors, dedicated artificial intelligence chips, cloud computing, distributed storage, big data processing technologies, pre-trained model technologies, operation/interaction systems, mechatronics. A pre-trained model, also referred to as a large model or a foundation model, can be widely applied to downstream tasks in various major directions of AI after fine-tuning. AI software technologies mainly include several major directions such as a computer vision (CV) technology, a speech processing technology, a natural language processing technology, and machine learning/deep learning.

Natural language processing (NLP) is an important direction in the fields of computer science and artificial intelligence. It studies various theories and methods that enable effective communication between humans and computers using natural language. Natural language processing involves natural language, i.e., the language used by people in daily life, and is closely related to linguistics research. Meanwhile, it also involves important technologies in computer science, mathematics, and model training in the field of artificial intelligence. Pre-trained models are developed from large language models (LLMs) in the NLP field. After fine-tuning, a large language model can be widely applied to downstream tasks. Natural language processing technologies usually include text processing, semantic understanding, machine translation, robotic question answering, knowledge graphs, and other technologies.

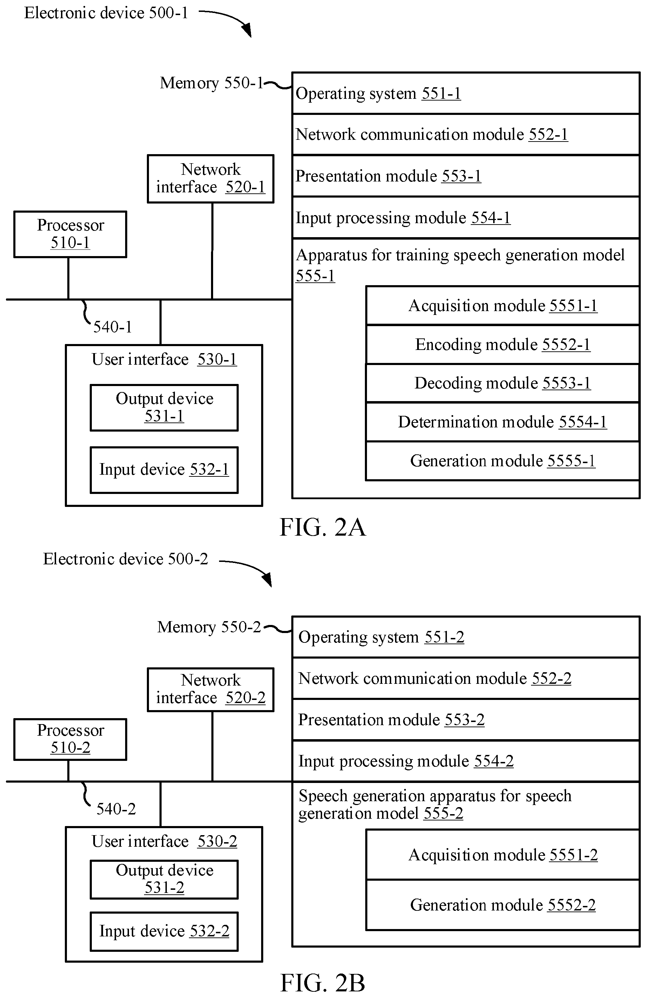

The electronic device that implements the method for training the speech generation model provided in the embodiment of this application may be the terminal 400 or the server 200 in FIG. 1. Referring to FIG. 2A, FIG. 2A is a schematic structural diagram of an electronic device 500-1 according to an embodiment of this application. The electronic device 500-1 shown in FIG. 2A includes: at least one processor 510-1, at least one network interface 520-1, a user interface 530-1, and a memory 550-1. Various components in the electronic device 500-1 are coupled together through a bus system 540-1. The bus system 540-1 is configured to implement connection and communication among these components. The bus system 540-1 includes, in addition to a data bus, a power bus, a control bus, and a status signal bus. However, for the sake of clarity, various buses are labeled as the bus system 540-1 in FIG. 2A.

The processor 510-1 may be an integrated circuit chip with signal processing capacity such as a general processor, a digital signal processor (DSP), or another programmable logic device, discrete gate or transistor logic device, or discrete hardware assembly. The general processor may be a microprocessor, any conventional processor, or the like.

The user interface 530-1 includes one or more output devices 531-1 that enable presentation of media content, including at least one of one or more speakers and one or more visual display screens. The user interface 530-1 further includes one or more input devices 532-1, including user interface components that facilitate user input, such as a keyboard, a mouse, a microphone, a touch display screen, a camera, other input buttons, and controls.

The memory 550-1 may be a removable memory, a non-removable memory, or a combination thereof. An exemplary hardware device includes a solid memory, a hard disk drive, an optical disk drive, and the like. In some embodiments, the memory 550-1 includes one or more storage devices away from the processor 510-1 in a physical position.

The memory 550-1 includes a volatile memory or a non-volatile memory, or may include both a volatile memory and a non-volatile memory. The non-volatile memory may be a read-only memory (ROM). The volatile memory may be a random access memory (RAM). The memory 550-1 described in the embodiment of this application is intended to include a memory of any suitable type.

In some embodiments, the memory 550-1 can store data to support various operations. An example of these data includes a program, a module, and a data structure or a subset or superset thereof, which will be exemplarily described below.

An operating system 551-1 includes system programs for processing various basic system services and executing hardware-related tasks, such as a framework layer, a core library layer, and a drive layer, and is configured to implement various basic services and process hardware-based tasks.

A network communication module 552-1 is configured to reach another electronic device through one or more (wired or wireless) network interfaces 520-1. Exemplary network interfaces 520-1 include Bluetooth, wireless fidelity (Wi-Fi), a universal serial bus (USB), and the like.

A presentation module 553-1 is configured to enable presentation of information (e.g., a user interface for operating peripheral devices and displaying content and information) via one or more output devices 531-1 (e.g., a display screen, a speaker) associated with the user interface 530-1.

An input processing module 554-1 is configured to detect one or more user inputs or interactions from one or more of the one or more input devices 532-1 and translate detected inputs or interactions.

In some embodiments, the apparatus provided in the embodiment of this application may be implemented in software. FIG. 2A shows an apparatus 555-1 for training a language understanding model stored in the memory 550-1, which may be software in the form of a program, a plug-in, or the like, and includes the following software modules: an acquisition module 5551-1, an encoding module 5552-1, a decoding module 5553-1, a determination module 5554-1, and a generation module 5555-1. These modules are logical, and therefore may be combined in different modes to form other embodiments or further split according to the functions they implement. The functions of the modules will be described hereinafter.

The electronic device that implements the speech generation method for the speech generation model provided in the embodiment of this application may be the terminal 400 or the server 200 in FIG. 1. Referring to FIG. 2B, FIG. 2B is a schematic structural diagram of an electronic device 500-2 according to an embodiment of this application. The electronic device 500-2 shown in FIG. 2B includes: at least one processor 510-2, at least one network interface 520-2, a user interface 530-2, and a memory 550-2. Various components in the electronic device 500-2 are coupled together through a bus system 540-2. The bus system 540-2 is configured to implement connection and communication among these components. The bus system 540-2 includes, in addition to a data bus, a power bus, a control bus, and a status signal bus. However, for the sake of clarity, various buses are labeled as the bus system 540-2 in FIG. 2B.

The processor 510-2 may be an integrated circuit chip with signal processing capacity such as a general processor, a digital signal processor (DSP), or another programmable logic device, discrete gate or transistor logic device, or discrete hardware assembly. The general processor may be a microprocessor, any conventional processor, or the like.

The user interface 530-2 includes one or more output devices 531-2 that enable presentation of media content, including at least one of one or more speakers and one or more visual display screens. The user interface 530-2 further includes one or more input devices 532-2, including user interface components that facilitate user input, such as a keyboard, a mouse, a microphone, a touch display screen, a camera, other input buttons, and controls.

The memory 550-2 may be a removable memory, a non-removable memory, or a combination thereof. An exemplary hardware device includes a solid memory, a hard disk drive, an optical disk drive, and the like. In some embodiments, the memory 550-2 includes one or more storage devices away from the processor 510-2 in a physical position.

The memory 550-2 includes a volatile memory or a non-volatile memory, or may include both a volatile memory and a non-volatile memory. The non-volatile memory may be a read-only memory (ROM). The volatile memory may be a random access memory (RAM). The memory 550-2 described in the embodiment of this application is intended to include a memory of any suitable type.

In some embodiments, the memory 550-2 can store data to support various operations. An example of these data includes a program, a module, and a data structure or a subset or superset thereof, which will be exemplarily described below.

An operating system 551-2 includes system programs for processing various basic system services and executing hardware-related tasks, such as a framework layer, a core library layer, and a drive layer, and is configured to implement various basic services and process hardware-based tasks.

A network communication module 552-2 is configured to reach another electronic device through one or more (wired or wireless) network interfaces 520-2. Exemplary network interfaces 520-2 include Bluetooth, wireless fidelity (Wi-Fi), a universal serial bus (USB), and the like.

A presentation module 553-2 is configured to enable presentation of information (e.g., a user interface for operating peripheral devices and displaying content and information) via one or more output devices 531-2 (e.g., a display screen, a speaker) associated with the user interface 530-2.

An input processing module 554-2 is configured to detect one or more user inputs or interactions from one or more of the one or more input devices 532-2 and translate detected inputs or interactions.

In some embodiments, the apparatus provided in the embodiment of this application may be implemented in software. FIG. 2B shows an apparatus 555-2 for training a language understanding model stored in the memory 520-2, which may be software in the form of a program, a plug-in, or the like, and includes the following software modules: an acquisition module 5551-2 and a generation module 5552-2. These modules are logical, and therefore may be combined in different modes to form other embodiments or further split according to the functions they implement. The functions of the modules will be described hereinafter.

In some embodiments, a terminal or a server may implement the method for training a language understanding model provided in the embodiment of this application by executing various computer-executable instructions or computer programs. For example, the computer-executable instructions may be microprogram-level commands, machine instructions, or software instructions. The computer program may be a native program or a software module in an operating system, or may be a native application (APP), i.e., a program that needs to be installed in an operating system to run. In summary, the computer-executable instructions described above may be in any form of instructions, and the computer program described above may be in any form of application program, module, or plug-in.

Hereinafter, a method for training a speech generation model provided in the embodiment of this application will be described. As described above, the electronic device that implements the method for training the speech generation model provided in the embodiment of this application may be a terminal or a server, or a combination thereof. Therefore, the execution subject of each operation will not be repeatedly described below.

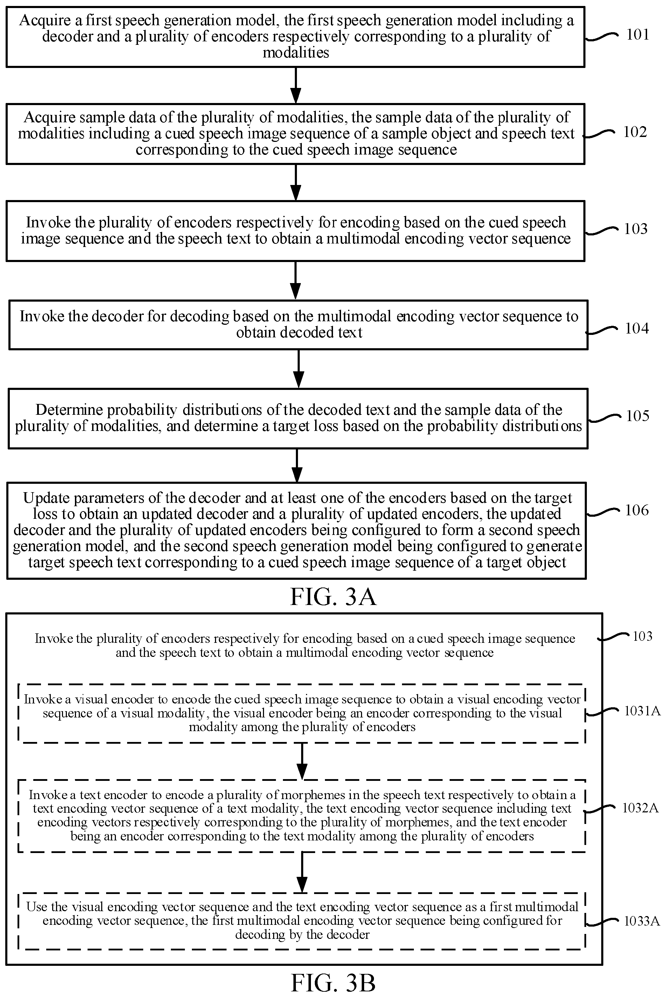

Referring to FIG. 3A, FIG. 3A is a schematic flowchart of a method for training a speech generation model according to an embodiment of this application. The method will be described with reference to the operations shown in FIG. 3A.

Operation 101: Acquire a first speech generation model, the first speech generation model including a decoder and a plurality of encoders respectively corresponding to a plurality of modalities.

In some embodiments, the first speech generation model may be pre-training locally to form the first speech generation model, or may be obtained from another device that has pre-trained and formed the first speech generation model, and includes a decoder and a plurality of encoders respectively corresponding to a plurality of modalities.

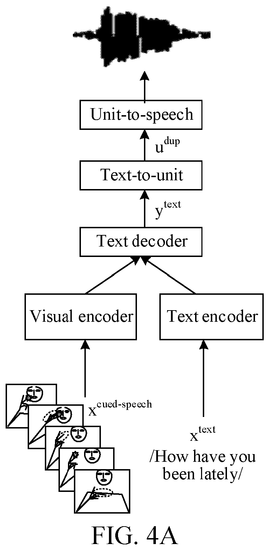

As an example, referring to FIG. 4A, FIG. 4A is a first schematic architectural diagram of a speech generation model according to an embodiment of this application. FIG. 4A shows a text decoder, a visual encoder corresponding to a visual modality, and a text encoder corresponding to a text modality.

Operation 102: Acquire sample data of the plurality of modalities, the sample data of the plurality of modalities including a cued speech image sequence of a sample object and speech text corresponding to the cued speech image sequence.

In some embodiments, sample data of a plurality of modalities for a sample object includes sample data of a visual modality, such as a cued speech image sequence of the sample object, and sample data of a text modality, such as speech text corresponding to the cued speech image sequence (i.e., the speech text is the text used to express the same semantic content as visual expression of the sample object in the cued speech image sequence). Each cued speech image in the cued speech image sequence is a static image showing a hand or lip posture of the sample object when the sample object performs a body movement or a lip movement. These static images can capture visual features of the sample object in a specific scene, provide rich visual information for a model, and help the model better understand the behavior and state of the sample object.

Here, the sample data of the visual modality refers to a data form that describes the sample object through visual information. Through intuitive modes such as hand movements, lip movements, and body movements, a viewer can obtain emotional states and intentions of a target object by perceiving and understanding visual expressions of the target object, such as facial expressions, eye gaze, and body language. The sample data of the text modality refers to data that describes the sample object in text form. Such text data may be an explanation or description of image content or other information related to the image, providing semantic supplementation for the model. By combining data of the visual modality and the text modality, the model can more comprehensively understand the features and behavior of the sample object.

As an example, the sample data of the visual modality of the sample object may be collected by way of camera shooting, an image database, a network source, or the like. Speech text related to the sample data of the visual modality of the sample object may be recorded by a recording device, or speech text matching the sample data of the visual modality of the sample object may be extracted from an existing speech database or corpus.

Operation 103: Invoke the plurality of encoders respectively for encoding based on the cued speech image sequence and the speech text to obtain a multimodal encoding vector sequence.

In some embodiments, referring to FIG. 3B, FIG. 3B is a first schematic flowchart of obtaining a multimodal encoding vector sequence according to an embodiment of this application. When the plurality of modalities include a visual modality and a text modality, operation 103 in FIG. 3A may be implemented through operations 1031A to 1033A in FIG. 3B, as specifically described below.

Operation 1031A: Invoke a visual encoder to encode the cued speech image sequence to obtain a visual encoding vector sequence of a visual modality, the visual encoder being an encoder corresponding to the visual modality among the plurality of encoders.

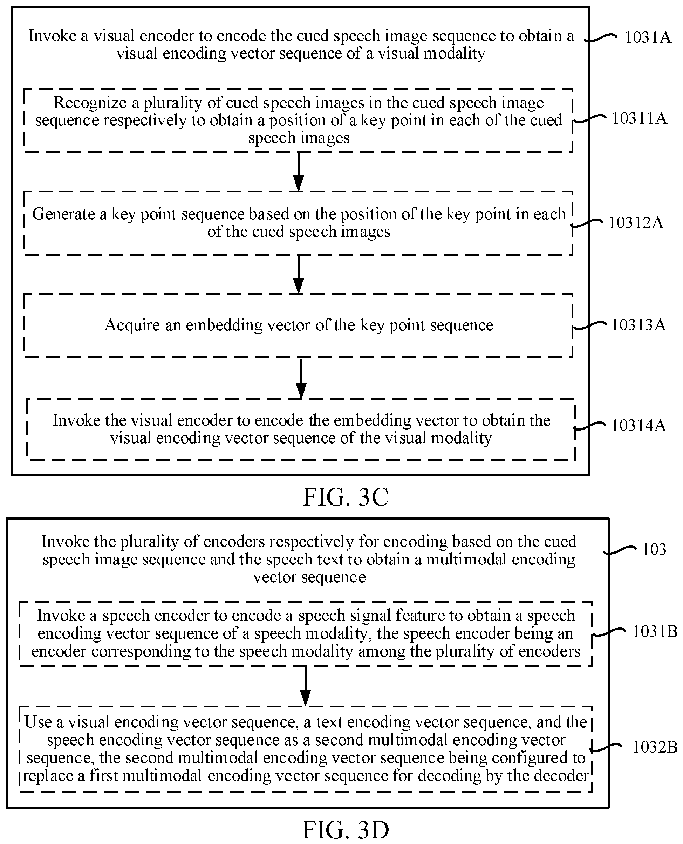

In some embodiments, referring to FIG. 3C, FIG. 3C is a schematic flowchart of obtaining a visual encoding vector sequence according to an embodiment of this application. Operation 1031A in FIG. 3B may be implemented through operations 10311A to 10314A in FIG. 3C, as specifically described below.

Operation 10311A: Recognize a plurality of cued speech images in the cued speech image sequence respectively to obtain a position of a key point in each of the cued speech images.

In some embodiments, human pose estimation (HPE) may be performed on a plurality of cued speech images in the cued speech image sequence respectively by using a deep learning model, to recognize positions of key points of a human body as positions of key points in each cued speech image. Here, human pose estimation is a computer vision task aimed at detecting and localizing key points of a human body (e.g., head, shoulder, elbow, knee) from an image or a video. Position information of these key points can be used to estimate the posture of the entire human body.

As an example, the deep learning model used to recognize the plurality of cued speech images in the cued speech image sequence may be open pose estimation (OpenPose), deep pose estimation (DeepPose), pose net (PoseNet), or dense pose (DensePose).

Operation 10312A: Generate a key point sequence based on the position of the key point in each of the cued speech images.

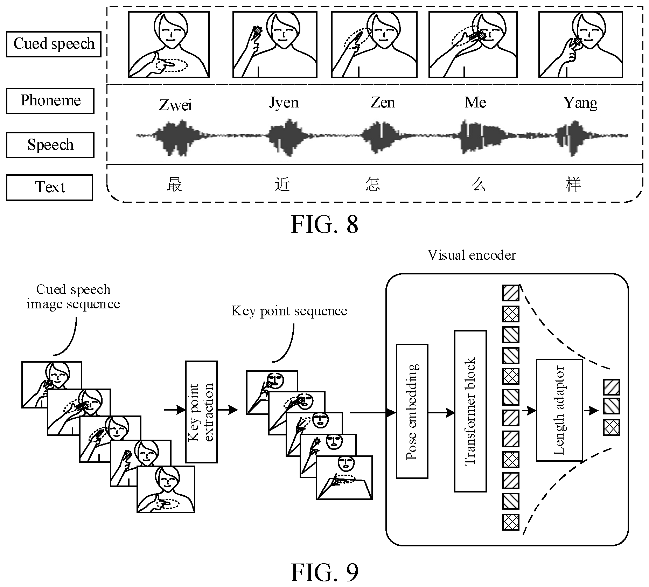

As an example, the positions of the key points in each cued speech image may be positions of lips, fingers, or the like. A key point sequence may be generated based on the positions of the key points in all cued speech images in a cued speech image sequence corresponding to a video. Referring to FIG. 9, in the cued speech image sequence shown in FIG. 9, points that mark positions of a hand and a lip in each cued speech image are key points. Based on the positions of the key points in each cued speech image, the key point sequence shown in FIG. 9 is obtained.

Operation 10313A: Acquire an embedding vector of the key point sequence.

In some embodiments, pose embedding processing may be performed on each key point in a key point sequence by using a machine learning model, to obtain an embedding vector for each key point in the key point sequence, and the embedding vectors may be concatenated to obtain an embedding vector corresponding to the key point sequence.

As an example, pose embedding may be performed on the key point sequence by using a recurrent neural network (RNN) or a convolutional neural network (CNN), to obtain an embedding vector of the key point sequence.

Operation 10314A: Invoke the visual encoder to encode the embedding vector to obtain the visual encoding vector sequence of the visual modality.

In some embodiments, a pre-trained machine learning model may be used as a visual encoder to encode the embedding vector, to obtain a visual encoding vector sequence of a visual modality.

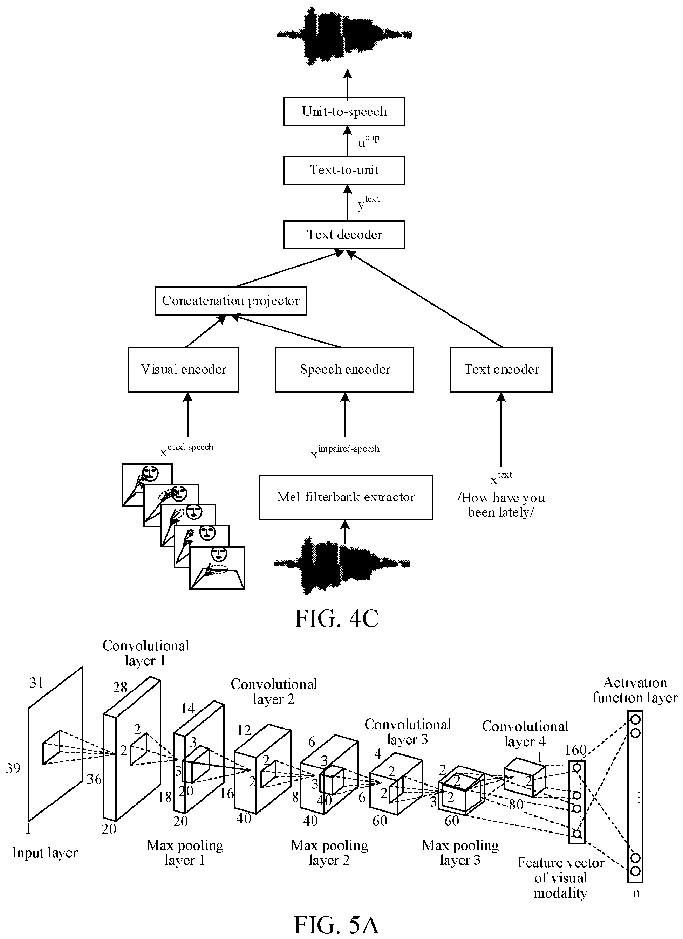

As an example, the model of the visual encoder may be a convolutional neural network model. Referring to FIG. 5A, FIG. 5A is a schematic structural diagram of a visual encoder model according to an embodiment of this application. The convolutional neural network shown in FIG. 5A includes an input layer, a convolutional layer, a pooling layer, and an output layer (a fully connected layer and an activation function layer (softmax layer)). After the embedding vector of the key point sequence of the visual modality is inputted into the convolutional neural network, convolution processing is sequentially performed on the embedding vector through a plurality of convolutional layers to obtain a feature map corresponding to the embedding vector. Then, max pooling processing is sequentially performed on the feature map through a plurality of max pooling layers to obtain a feature vector of the visual modality. Finally, the output layer outputs a visual encoding vector sequence of the visual modality.

In this embodiment of this application, by converting a human body movement in a video into a key point sequence of a visual modality, key information in a cued speech image is extracted in the form of a key point sequence. These key points can capture information such as a body movement or a lip movement of a human body in the image, thereby retaining the key information in the image in the form of a key point sequence, and can clearly describe changes in human body posture and movement. Compared with directly processing raw image or video data, the key point sequence greatly reduces the complexity of the data. Through the above mode, the most critical information in the image is extracted, redundant data is reduced, and computational efficiency is improved, facilitating subsequent analysis and recognition of cued speech image features of the visual modality, and enabling effective utilization of characteristic information in the cued speech image.

Continuing to refer to FIG. 3B, the description proceeds with operation 1031A above.

Operation 1032A: Invoke a text encoder to encode a plurality of morphemes in the speech text respectively to obtain a text encoding vector sequence of a text modality, the text encoding vector sequence including text encoding vectors respectively corresponding to the plurality of morphemes, and the text encoder being an encoder corresponding to the text modality among the plurality of encoders.

In some embodiments, language segmentation is performed on the speech text to split it into a plurality of morphemes (e.g., words, phrases, or sentences). The text encoder may be a machine learning model. The machine learning model respectively encodes the plurality of morphemes in the speech text, converts the morphemes into text encoding vectors, and combines the text encoding vectors corresponding to the morphemes of the speech text, to obtain a text encoding vector sequence of the text modality.

As an example, the machine learning model used to encode the speech text may be a recurrent neural network, a convolutional neural network, a transformer, a bidirectional encoder representations from transformer (BERT), or the like.

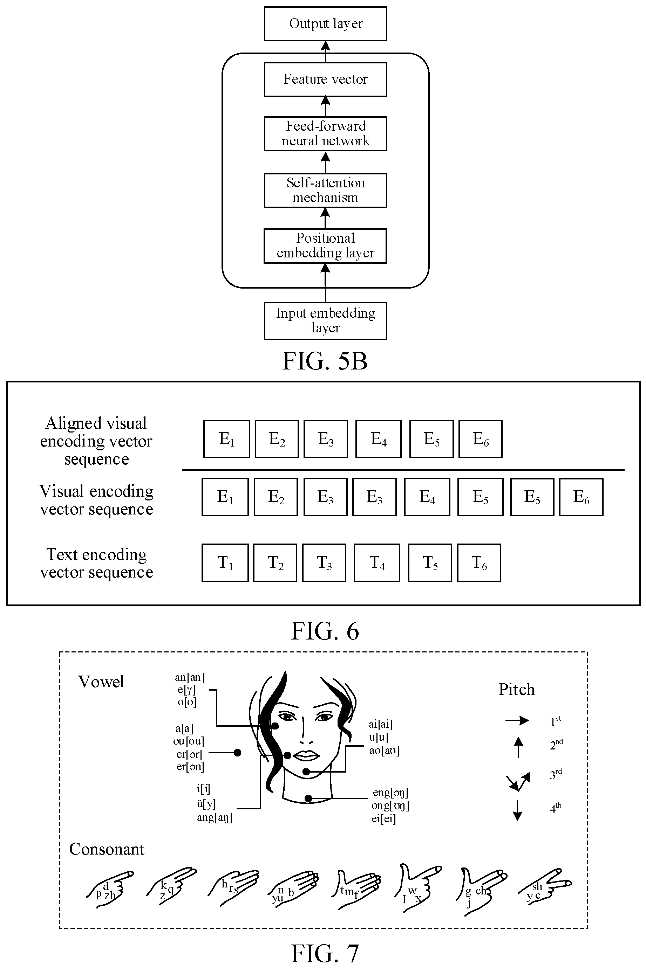

Referring to FIG. 5B, FIG. 5B is a schematic structural diagram of a machine learning model according to an embodiment of this application. FIG. 5B shows an input embedding layer, a positional embedding layer, a self-attention mechanism, a feed-forward neural network, and an output layer. First, morphemes of the speech text are converted into fixed-dimensional text embedding vectors through the input embedding layer. Typically, a word embedding technique is used to map the morphemes into vector representations in a continuous space. Second, position information of each morpheme is embedded into a feature vector through the positional embedding layer, to obtain a positional embedding vector. Then, through the self-attention mechanism, the importance of each morpheme in a context is modeled, and semantic relationships are learned. Through the feed-forward neural network layer, nonlinear transformation and mapping are performed on the positional embedding vector of each morpheme, thereby extracting higher-level semantic and contextual information. Finally, the entire text encoding vector sequence is generated based on the positional embedding vectors of the morphemes one by one.

Operation 1033A: Use the visual encoding vector sequence and the text encoding vector sequence as a first multimodal encoding vector sequence, the first multimodal encoding vector sequence being configured for decoding by the decoder.

In some embodiments, when the plurality of modalities include a visual modality and a text modality, the multimodal encoding vector sequence includes a visual encoding vector sequence corresponding to the visual modality and a text encoding vector sequence corresponding to the text modality.

In this embodiment of this application, by respectively encoding a plurality of morphemes in the speech text into a text encoding vector sequence of the text modality, the encoding vector of each morpheme can capture its semantic information and contextual relationships, thereby better expressing the meaning of the entire text and improving the accuracy of subsequent speech generation.

In some embodiments, referring to FIG. 3D, FIG. 3D is a second schematic flowchart of obtaining a multimodal encoding vector sequence according to an embodiment of this application. When the plurality of modalities further include a speech modality, the sample data of the plurality of modalities further includes a speech signal feature of the speech modality. Operation 103 in FIG. 3A may be implemented through operations 1031B to 1032B in FIG. 3D, as specifically described below.

Operation 1031B: Invoke a speech encoder to encode a speech signal feature to obtain a speech encoding vector sequence of a speech modality, the speech encoder being an encoder corresponding to the speech modality among the plurality of encoders.

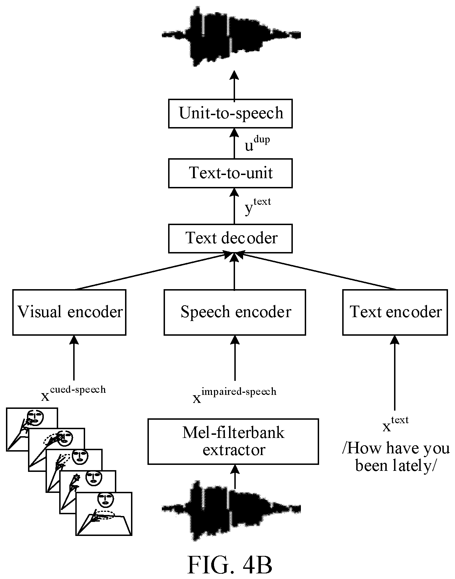

As an example, referring to FIG. 4B, FIG. 4B is a second schematic architectural diagram of a speech generation model according to an embodiment of this application. FIG. 4B shows a text decoder, a visual encoder corresponding to a visual modality, a text encoder corresponding to a text modality, and a speech encoder corresponding to a speech modality.

In some embodiments, invoking the speech encoder to encode the speech signal feature to obtain a speech encoding vector sequence of the speech modality may be implemented in the following mode: first, preprocessing is performed on the original speech signal, such as noise removal (removing background noise to retain a clean speech signal), filtering (removing noise within a specific frequency range or enhancing the speech signal within a specific frequency range), volume normalization. Second, the preprocessed speech signal is divided into short-term frames. A commonly used frame length is 20 milliseconds to 40 milliseconds, typically with 50% or 75% overlap. Then, each frame of the speech signal is multiplied by a window function, such as a Hamming window or a rectangular window, to reduce boundary artifacts between frames. A fast Fourier transform (FFT) is applied to each frame to convert the time-domain signal into a frequency-domain representation. Finally, speech encoding vectors are extracted from the spectrum, and the speech encoding vectors are concatenated to obtain a speech encoding vector sequence.

As an example, the model of the speech encoder used to encode the speech signal feature may be a Mel-filterbank extractor.

Operation 1032B: Use a visual encoding vector sequence, a text encoding vector sequence, and the speech encoding vector sequence as a second multimodal encoding vector sequence, the second multimodal encoding vector sequence being configured to replace a first multimodal encoding vector sequence for decoding by the decoder.

In some embodiments, when the plurality of modalities include a visual modality, a text modality, and a speech modality, the multimodal encoding vector sequence includes a visual encoding vector sequence corresponding to the visual modality, a text encoding vector sequence corresponding to the text modality, and a speech encoding vector sequence corresponding to the speech modality.

By introducing the encoding vector sequence of the speech modality, the speech generation model can more comprehensively capture correlations among multimodal information. The addition of the speech signal feature enables the model to better understand semantic alignment relationships between speech content and visual and text information. Fusing the speech encoding vector sequence with encoding vector sequences of other modalities to form a unified multimodal representation enables the speech generation model to process multimodal data more efficiently. Particularly, in tasks that require simultaneous processing of a plurality of modalities, the model's performance in multimodal tasks can be significantly improved, its semantic understanding capability can be enhanced, generation quality can be increased, and the robustness and adaptability of the speech generation model can be improved.

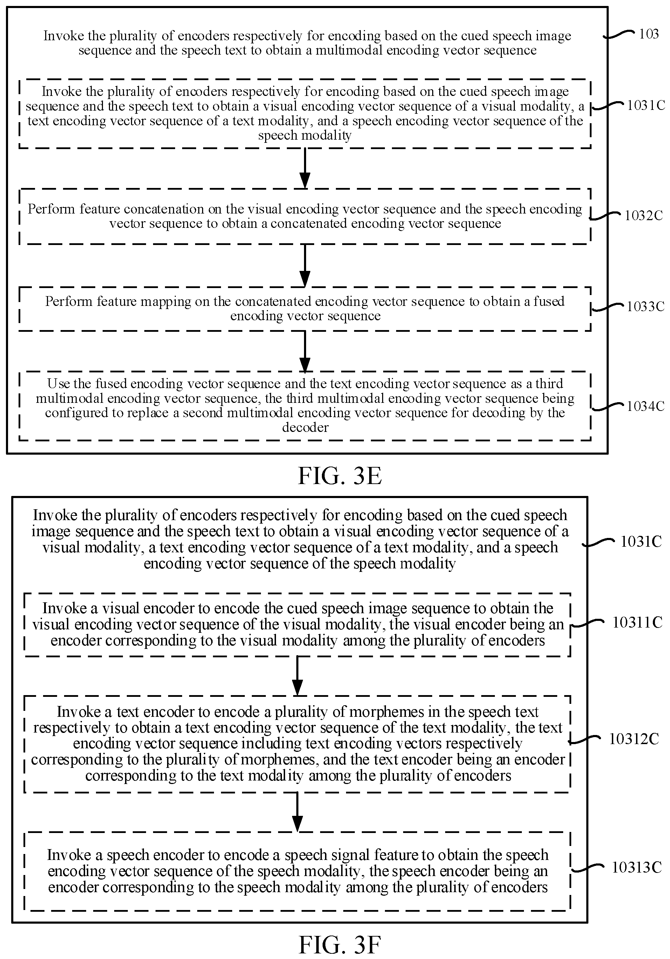

In some embodiments, referring to FIG. 3E, FIG. 3E is a third schematic flowchart of obtaining a multimodal encoding vector sequence according to an embodiment of this application. When the plurality of modalities further include a speech modality, operation 103 in FIG. 3A may also be implemented through operations 1031C to 1034C in FIG. 3E, as specifically described below.

Operation 1031C: Invoke the plurality of encoders respectively for encoding based on the cued speech image sequence and the speech text to obtain a visual encoding vector sequence of a visual modality, a text encoding vector sequence of a text modality, and a speech encoding vector sequence of the speech modality.

In some embodiments, as described above, when the plurality of modalities include a visual modality, a text modality, and a speech modality, a visual encoder may be invoked to encode sample data of the visual modality to obtain a visual encoding vector sequence of the visual modality; a text encoder may be invoked to encode sample data of the text modality to obtain a text encoding vector sequence of the text modality; and a speech encoder may be invoked to encode sample data of the speech modality to obtain a speech encoding vector sequence of the speech modality.

In some embodiments, the sample data of the plurality of modalities further includes a speech signal feature of a speech modality. Referring to FIG. 3F, FIG. 3F is a fourth schematic flowchart of obtaining a multimodal encoding vector sequence according to an embodiment of this application. Operation 1031C in FIG. 3E may be implemented through operations 10311C to 10313C in FIG. 3F, as specifically described below.

Operation 10311C: Invoke a visual encoder to encode the cued speech image sequence to obtain the visual encoding vector sequence of the visual modality, the visual encoder being an encoder corresponding to the visual modality among the plurality of encoders.

In some embodiments, the above operation 10311C may be implemented by performing the following processing:
First, a plurality of cued speech images in the cued speech image sequence are recognized respectively to obtain a position of a key point in each cued speech image.

In some embodiments, human pose estimation (HPE) may be performed on a plurality of cued speech images in the cued speech image sequence respectively by using a deep learning model, to recognize positions of key points of a human body as positions of key points in each cued speech image. Here, human pose estimation is a computer vision task aimed at detecting and localizing key points of a human body (e.g., head, shoulder, elbow, knee) from an image or a video. Position information of these key points can be used to estimate the posture of the entire human body.

As an example, the deep learning model used to recognize the plurality of cued speech images in the cued speech image sequence may be open pose estimation, deep pose estimation, pose net, or dense pose.

Second, a key point sequence is generated based on the position of the key point in each cued speech image.

As an example, the positions of the key points in each cued speech image may be positions of lips, fingers, or the like. A key point sequence may be generated based on the positions of the key points in all cued speech images in a cued speech image sequence corresponding to a video. Referring to FIG. 9, in the cued speech image sequence shown in FIG. 9, points that mark positions of a hand and a lip in each cued speech image are key points. Based on the positions of the key points in each cued speech image, the key point sequence shown in FIG. 9 is obtained.

Then, an embedding vector of the key point sequence is acquired.

In some embodiments, pose embedding processing may be performed on each key point in a key point sequence by using a machine learning model, to obtain an embedding vector for each key point in the key point sequence, and the embedding vectors may be concatenated to obtain an embedding vector corresponding to the key point sequence.

As an example, pose embedding may be performed on the key point sequence by using a recurrent neural network or a convolutional neural network to obtain an embedding vector of the key point sequence.

Finally, the visual encoder is invoked to encode the embedding vector to obtain a visual encoding vector sequence of the visual modality.

In some embodiments, a pre-trained machine learning model may be used as a visual encoder to encode the embedding vector, to obtain a visual encoding vector sequence of a visual modality.

As an example, the model of the visual encoder may be a convolutional neural network model. Referring to FIG. 5A, FIG. 5A is a schematic structural diagram of a visual encoder model according to an embodiment of this application. The convolutional neural network shown in FIG. 5A includes an input layer, a convolutional layer, a pooling layer, and an output layer. After the embedding vector of the key point sequence of the visual modality is inputted into the convolutional neural network, convolution processing is sequentially performed on the embedding vector through a plurality of convolutional layers to obtain a feature map corresponding to the embedding vector. Then, max pooling processing is sequentially performed on the feature map through a plurality of max pooling layers to obtain a feature vector of the visual modality. Finally, the output layer outputs a visual encoding vector sequence of the visual modality.

In this embodiment of this application, by converting a human body movement in a video into a key point sequence of a visual modality, key information in a cued speech image is extracted in the form of a key point sequence. These key points can capture information such as a body movement or a lip movement of a human body in the image, thereby retaining the key information in the image in the form of a key point sequence, and can clearly describe changes in human body posture and movement. Compared with directly processing raw image or video data, the key point sequence greatly reduces the complexity of the data. Through the above mode, the most critical information in the image is extracted, redundant data is reduced, and computational efficiency is improved, facilitating subsequent analysis and recognition of cued speech image features of the visual modality, and enabling effective utilization of characteristic information in the cued speech image.

Operation 10312C: Invoke a text encoder to encode a plurality of morphemes in the speech text respectively to obtain a text encoding vector sequence of the text modality, the text encoding vector sequence including text encoding vectors respectively corresponding to the plurality of morphemes, and the text encoder being an encoder corresponding to the text modality among the plurality of encoders.

In some embodiments, the above operation 10312C may be implemented by performing the following processing: performing language segmentation on the speech text to split it into a plurality of morphemes (e.g., words, phrases, or sentences). The text encoder may be a machine learning model. The machine learning model respectively encodes the plurality of morphemes in the speech text, converts the morphemes into text encoding vectors, and combines the text encoding vectors corresponding to the morphemes of the speech text, to obtain a text encoding vector sequence of the text modality.

As an example, the machine learning model used to encode the speech text may be a recurrent neural network, a convolutional neural network, a Transformer, a bidirectional encoder representation from Transformer, or the like.

Referring to FIG. 5B, FIG. 5B is a schematic structural diagram of a machine learning model according to an embodiment of this application. FIG. 5B shows an input embedding layer, a positional embedding layer, a self-attention mechanism, a feed-forward neural network, and an output layer. First, morphemes of the speech text are converted into fixed-dimensional text embedding vectors through the input embedding layer. Typically, a word embedding technique is used to map the morphemes into vector representations in a continuous space. Second, position information of each morpheme is embedded into a feature vector through the positional embedding layer, to obtain a positional embedding vector. Then, through the self-attention mechanism, the importance of each morpheme in a context is modeled, and semantic relationships are learned. Through the feed-forward neural network layer, nonlinear transformation and mapping are performed on the positional embedding vector of each morpheme, thereby extracting higher-level semantic and contextual information. Finally, the entire text encoding vector sequence is generated based on the positional embedding vectors of the morphemes one by one.

Operation 10313C: Invoke a speech encoder to encode a speech signal feature to obtain the speech encoding vector sequence of the speech modality, the speech encoder being an encoder corresponding to the speech modality among the plurality of encoders.

In some embodiments, invoking the speech encoder to encode the speech signal feature to obtain a speech encoding vector sequence of the speech modality may be implemented in the following mode: first, preprocessing is performed on the original speech signal, such as noise removal, filtering, volume normalization. Second, the preprocessed speech signal is divided into short-term frames. A commonly used frame length is 20 milliseconds to 40 milliseconds, typically with 50% or 75% overlap. Then, each frame of the speech signal is multiplied by a window function, such as a Hamming window or a rectangular window, to reduce boundary artifacts between frames. A fast Fourier transform is applied to each frame to convert the time-domain signal into a frequency-domain representation. Finally, speech encoding vectors are extracted from the spectrum, and the speech encoding vectors are concatenated to obtain a speech encoding vector sequence.

Continuing to refer to FIG. 3E, the description proceeds with operation 1031C above.

Operation 1032C: Perform feature concatenation on the visual encoding vector sequence and the speech encoding vector sequence to obtain a concatenated encoding vector sequence.

In some embodiments, feature concatenation may be performed on feature vectors in the visual encoding vector sequence and feature vectors in the speech encoding vector sequence to obtain a concatenated encoding vector, and the concatenated encoding vectors corresponding to respective positions are combined to obtain a concatenated encoding vector sequence.

As an example, if the visual encoding vector in the visual encoding vector sequence outputted by the visual encoder is ${{x}^{˜}}^{cued - speech} ∈ {ℝ}^{f \times D}$, and the speech encoding vector in the speech encoding vector sequence outputted by the speech encoder is ${{x}^{˜}}^{impaired - speech} ∈ {ℝ}^{f \times D}$, where *f* represents the length of the encoding vector sequence and D represents the dimension of the encoding vectors in the encoding vector sequence, then feature concatenation is performed on the visual encoding vector sequence and the speech encoding vector sequence, and the obtained concatenated encoding vector is $\left({{x}^{˜}}^{cued - speech}, {{x}^{˜}}^{impaired - speech}\right) ∈ {ℝ}^{f \times 2 D}$.

Operation 1033C: Perform feature mapping on the concatenated encoding vector sequence to obtain a fused encoding vector sequence.

As an example, in the above example, the dimension of the concatenated encoding vector in the concatenated encoding vector sequence is 2D. By performing feature mapping on the concatenated encoding vector sequence, the dimension of the concatenated encoding vector is converted from 2D to D, and a fused encoding vector ${{x}^{˜}}^{cued - impaired - speech} ∈ {ℝ}^{f \times D}$ is obtained. The fused encoding vectors at respective positions are combined to obtain a fused encoding vector sequence.

Operation 1034C: Use the fused encoding vector sequence and the text encoding vector sequence as a third multimodal encoding vector sequence, the third multimodal encoding vector sequence being configured to replace a second multimodal encoding vector sequence for decoding by the decoder.

As an example, referring to FIG. 4C, FIG. 4C is a third schematic architectural diagram of a speech generation model according to an embodiment of this application. FIG. 4C shows a text decoder, a visual encoder corresponding to a visual modality, a text encoder corresponding to a text modality, and a speech encoder corresponding to a speech modality. As shown in FIG. 4C, after feature concatenation and mapping are performed on the visual encoding vector sequence outputted by the visual encoder and the speech encoding vector sequence outputted by the speech encoder, a fused encoding vector sequence is obtained, which is then used together with the output of the text encoder as a third multimodal encoding vector sequence.

In this embodiment of this application, by invoking encoders respectively corresponding to a plurality of modalities in the first speech generation model to encode sample data of a plurality of different modalities, a multimodal encoding vector sequence is obtained, and three different modality combination encoding modes are further provided, so that the first speech generation model can fully learn features of different modalities, i.e., a visual modality, a text modality, and a speech modality. This can improve the capability of the speech generation model to perform speech generation tasks and improve the accuracy of speech generation. Meanwhile, different modality combination modes can ensure that the execution of speech generation tasks can adapt to different application scenarios, thereby improving user experience.

Continuing to refer to FIG. 3A, the description proceeds with operation 103 above.

Operation 104: Invoke the decoder for decoding based on the multimodal encoding vector sequence to obtain decoded text.

In some embodiments, the first speech generation model is a pre-trained speech recognition model, and after pre-training, a representation space of the text modality and a representation space of the speech modality of the first speech generation model have been unified into the same representation space.

Here, representation space refers to a vector space including feature vectors or feature representations, and is used to describe and represent different attributes, features, or information of data. In different modalities, a representation space reflects features of different types of data and their representations in the vector space. For example, a representation space of a visual modality is a vector space including visual feature vectors, and a representation space of a text modality is a vector space including text feature vectors.

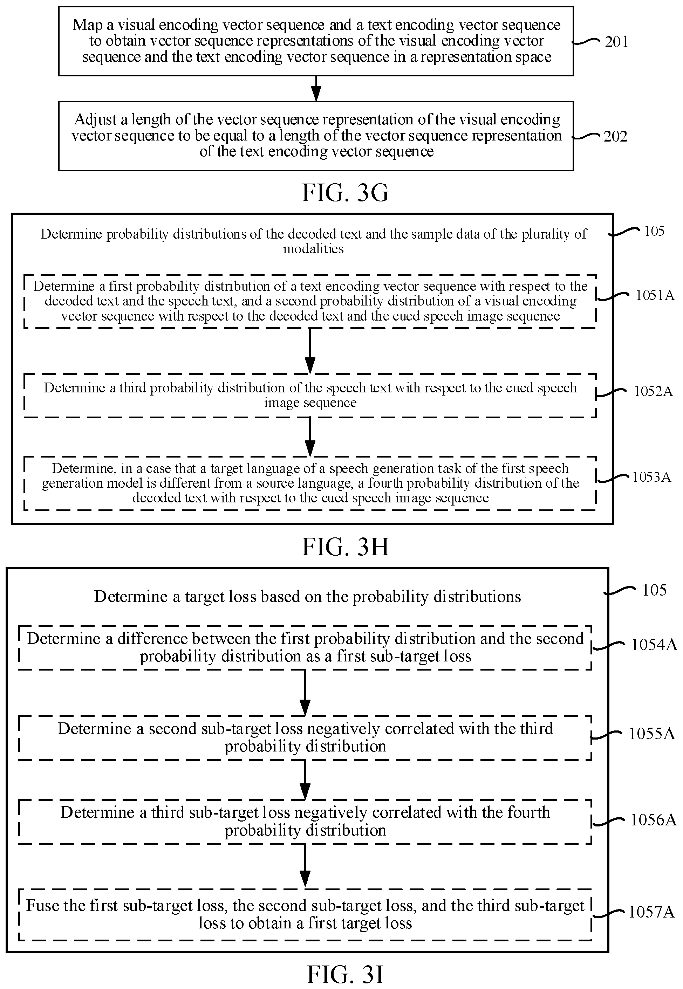

Referring to FIG. 3G, FIG. 3G is a schematic flowchart of length alignment of encoding vector sequences according to an embodiment of this application. Before operation 104 in FIG. 3A is performed, the lengths of the multimodal encoding vector sequences may be aligned through operations 201 to 202 in FIG. 3G, as specifically described below.

Operation 201: Map a visual encoding vector sequence and a text encoding vector sequence to obtain vector sequence representations of the visual encoding vector sequence and the text encoding vector sequence in a representation space.

In some embodiments, the visual encoding vector sequence and the text encoding vector sequence are mapped by using a linear mapping function to obtain vector sequence representations of the visual encoding vector sequence and the text encoding vector sequence in the same representation space.

As an example, referring to FIG. 6, FIG. 6 is a schematic diagram of encoding vector sequence alignment according to an embodiment of this application. The vector sequence representation of the visual encoding vector sequence in the representation space is expressed as "E1 E2 E3 E3 E4 E5 E5 E6", and the vector sequence representation of the text encoding vector sequence in the representation space is expressed as "T1 T2 T3 T4 T5 T6".

Operation 202: Adjust a length of the vector sequence representation of the visual encoding vector sequence to be equal to a length of the vector sequence representation of the text encoding vector sequence.

As an example, in the above example, the length of the vector sequence representation of the visual encoding vector sequence is 8, and the length of the vector sequence representation of the text encoding vector sequence is 6. Since there is redundant information "E3" and "E5" in the vector sequence representation of the visual encoding vector sequence, the redundant information in the vector sequence representation of the visual encoding vector sequence is deleted, and the vector sequence representation of the visual encoding vector sequence becomes "E1 E2 E3 E4 E5 E6". At this time, the length of the vector sequence representation of the visual encoding vector sequence is the same as the length of the vector sequence representation of the text encoding vector sequence.

In this embodiment of this application, a training process for the first speech generation model is performed based on a pre-trained speech recognition model. Based on the representation space of the text modality and the representation space of the speech modality having been unified into the same representation space, the conversion function from a cued speech image sequence to speech text can be implemented based on the original functions of the pre-trained speech recognition model through fine-tuning. At the same time, a plurality of functions of the pre-trained speech recognition model itself can be reused, such as recognizing a cued speech image sequence of a target object, text translation, and speech generation, thereby avoiding repeated development and improving development efficiency.

By aligning the lengths of the feature sequences of the two modalities, the feature sequences can be made more consistent in the feature space, thereby facilitating the speech generation model to perform speech generation tasks. Such a processing process can improve the overall efficiency and performance of the speech generation model when processing multimodal data.

Continuing to refer to FIG. 3A, the description proceeds with operation 104 above.

Operation 105: Determine probability distributions of the decoded text and the sample data of the plurality of modalities, and determine a target loss based on the probability distributions.

In some embodiments, the determining probability distributions of the decoded text and the sample data of the plurality of modalities in operation 105 may be implemented in the following mode: determining, with respect to preset conditions, probability distributions of encoding vector sequences of sample data of at least two modalities, different modalities corresponding to different preset conditions; determining a probability distribution of the speech text with respect to sample data of at least one of the modalities; and determining a probability distribution of the decoded text with respect to sample data of at least one of the modalities.

Here, probability distributions of encoding vector sequences of sample data of at least two modalities with respect to preset conditions are determined, where different modalities correspond to different preset conditions, which may specifically depend on data involved in the encoding structure of the model; a probability distribution of the speech text with respect to sample data of at least one modality, i.e., a conditional probability distribution of the speech text conditioned on the sample data of the at least one modality is determined; and a probability distribution of the decoded text with respect to sample data of at least one modality, i.e., a conditional probability distribution of the decoded text conditioned on the sample data of the at least one modality is determined. Different modalities correspond to different conditions, which may specifically depend on the encoding structure of the model.

For example, the architecture of the speech generation model shown in FIG. 4A shows a text decoder, a visual encoder corresponding to a visual modality, and a text encoder corresponding to a text modality. The speech generation model in FIG. 4A includes only two modalities, i.e., a visual modality and a text modality. Therefore, probability distributions of the decoded text and the sample data of the plurality of modalities are determined based on the visual modality and the text modality, and a target loss is determined based on the probability distributions. For the architecture of FIG. 4A, the preset condition for the text modality may be the decoded text and the speech text, and the preset condition for the visual modality may be the decoded text and the cued speech image sequence; the condition for the speech text is the cued speech image sequence; and the condition for the decoded text is the cued speech image sequence.

For example, the architecture of the speech generation model shown in FIG. 4B shows a text decoder, a visual encoder corresponding to a visual modality, a text encoder corresponding to a text modality, and a speech encoder corresponding to a speech modality. Compared with FIG. 4A, the speech generation model in FIG. 4B further incorporates a language modality for training. Therefore, probability distributions of the decoded text and the sample data of the plurality of modalities are determined based on the speech modality and the text modality, and a target loss is then determined based on the probability distributions. For the architecture of FIG. 4B, the preset condition for the text modality may be the decoded text and the speech text, and the preset condition for the speech modality may be the decoded text and the speech signal feature; the condition for the speech text is the speech signal feature; and the condition for the decoded text is the speech signal feature.

For example, in the architecture of the speech generation model shown in FIG. 4C, after feature concatenation and mapping are performed on the visual encoding vector sequence outputted by the visual encoder and the speech encoding vector sequence outputted by the speech encoder, a fused encoding vector sequence is obtained, which is then used together with the output of the text encoder as a third multimodal encoding vector sequence. Therefore, probability distributions of the decoded text and the sample data of the plurality of modalities are determined based on the visual modality, the speech modality, and the text modality, and a target loss is then determined based on the probability distributions. For the architecture of FIG. 4C, the preset condition for the text modality may be the decoded text and the speech text, and the preset condition for the fused encoding vector sequence may be the decoded text, the cued speech image sequence, and the speech signal feature; the condition for the speech text is the cued speech image sequence and the speech signal feature; and the condition for the decoded text is the cued speech image sequence and the speech signal feature.

In this embodiment of this application, by determining probability distributions of encoding vector sequences of sample data of at least two modalities with respect to preset conditions, and by setting different preset conditions for different modalities and calculating the probability distributions of their encoding vector sequences, the features and intrinsic relationships of data of various modalities can be more deeply understood. For example, in image-text cross-modal retrieval, by constructing semantic spaces of different modalities and learning sample semantic distributions, sample semantics belonging to different modalities can be more accurately aligned. Different modalities correspond to different preset conditions, enabling the model to better adapt to the characteristics of data of various modalities, thereby improving the generalization capability of the model in multimodal tasks. By calculating the probability distributions of the speech text and the sample data of the modalities, the relationship between speech and modalities such as vision and text can be more accurately modeled, thereby improving the accuracy of speech recognition and generation. By calculating the probability distributions of the decoded text and the sample data of the modalities, consistency between the decoded text and the input modality data can be ensured, improving decoding quality. For example, in a text generation task, by modeling conditional probability distributions, text that better meets contextual and semantic requirements can be generated. Through the above mode, more intelligent and flexible multimodal interaction can be achieved, improving the convenience of interaction and user experience.

In some embodiments, the determining a target loss based on the probability distributions in operation 105 may be implemented in the following mode:

for the encoding vector sequences of the sample data of at least two modalities, determining, based on the probability distributions of the encoding vector sequences of the sample data of the at least two modalities with respect to preset conditions, differences between the probability distributions of the encoding vector sequences of different modalities as sub-target losses of the encoding vector sequences; determining, based on the probability distribution of the speech text with respect to the sample data of at least one modality, a sub-target loss of the speech text negatively correlated with the probability distribution; and determining, based on the probability distribution of the decoded text with respect to the sample data of at least one modality, a sub-target loss of the decoded text negatively correlated with the probability distribution.

For example, in the architecture shown in FIG. 4A, based on the probability distributions of the encoding vector sequences of the sample data of the visual modality and the text modality with respect to preset conditions, a difference between the probability distributions of the encoding vector sequences of the visual modality and the text modality is determined as a sub-target loss of the encoding vector sequences; a sub-target loss of the speech text negatively correlated with the probability distribution is determined based on the probability distribution of the speech text with respect to the sample data of the visual modality; a sub-target loss of the speech text negatively correlated with the probability distribution is determined based on the probability distribution of the decoded text with respect to the sample data of the visual modality; and the sub-target loss of the encoding vector sequences, the sub-target loss of the speech text, and the sub-target loss of the decoded text are fused to obtain a target loss.

For example, in the architecture shown in FIG. 4B, based on the probability distributions of the encoding vector sequences of the sample data of the speech modality and the text modality with respect to preset conditions, a difference between the probability distributions of the encoding vector sequences of the speech modality and the text modality is determined as a sub-target loss of the encoding vector sequences; a sub-target loss of the speech text negatively correlated with the probability distribution is determined based on the probability distribution of the speech text with respect to the sample data of the speech modality; a sub-target loss of the speech text negatively correlated with the probability distribution is determined based on the probability distribution of the decoded text with respect to the sample data of the speech modality; and the sub-target loss of the encoding vector sequences, the sub-target loss of the speech text, and the sub-target loss of the decoded text are fused to obtain a target loss.

For example, in the architecture shown in FIG. 4C, based on the probability distributions of the encoding vector sequences of the sample data of the visual modality, the speech modality, and the text modality with respect to preset conditions, a difference between the probability distribution of the fused encoding vector sequence and the probability distribution of the encoding vector sequence of the text modality is determined as a sub-target loss of the encoding vector sequences; a sub-target loss of the speech text negatively correlated with the probability distribution is determined based on the probability distribution of the speech text with respect to the sample data of the visual modality and the speech modality; a sub-target loss of the speech text negatively correlated with the probability distribution is determined based on the probability distribution of the decoded text with respect to the sample data of the visual modality and the speech modality; and the sub-target loss of the encoding vector sequences, the sub-target loss of the speech text, and the sub-target loss of the decoded text are fused to obtain a target loss.

Hereinafter, specific descriptions are provided with reference to the three different architectures of the speech generation model shown in FIG. 4A to FIG. 4C.

For the architecture of the speech generation model shown in FIG. 4A, referring to FIG. 3H, FIG. 3H is a first schematic flowchart of determining probability distributions according to an embodiment of this application. The operation of "determining probability distributions of the decoded text and the sample data of the plurality of modalities" in operation 105 of FIG. 3A may be implemented by: for the encoding vector sequences of the sample data of the visual modality and the text modality, determining, as described above, probability distributions of the encoding vector sequences of the sample data of the visual modality and the text modality with respect to preset conditions, determining a probability distribution of the speech text with respect to the cued speech image sequence, and determining a probability distribution of the decoded text with respect to the cued speech image sequence. A detailed description is provided below with reference to operations 1051A to 1053A in FIG. 3H.

Operation 1051A: Determine a first probability distribution of a text encoding vector sequence with respect to the decoded text and the speech text, and a second probability distribution of a visual encoding vector sequence with respect to the decoded text and the cued speech image sequence.

In some embodiments, the above operation 1051A may be implemented in the following mode: invoking a pre-trained first probability distribution model to determine a first probability distribution of the text encoding vector sequence with respect to the decoded text and the speech text, where the first probability distribution model is trained by: acquiring first sample data, the first sample data including a sample decoded text, a sample speech text, and a reference probability distribution of a sample text encoding vector sequence with respect to the sample decoded text and the sample speech text; using the sample decoded text, the sample speech text, and the sample text encoding vector sequence as inputs of an initialized first probability distribution model, and outputting a predicted probability distribution of the text encoding vector sequence with respect to the sample decoded text and the sample speech text; determining a loss value based on a difference between the predicted probability distribution and the reference probability distribution; and updating parameters of the first probability distribution model according to the loss value.

By calculating the probability distribution of the text encoding vector sequence with respect to the decoded text and the speech text, semantic information of different modalities can be more accurately aligned. This alignment mode can ensure consistency and relevance of text, speech, and visual information during the generation process. The probability distribution model can capture complex dependencies between the text encoding vector and the decoded text and the speech text, thereby improving the semantic understanding capability of the model for multimodal data.

As an example, the first probability distribution of the text encoding vector sequence with respect to the decoded text and the speech text may be expressed as $p \left(⋅\left|{y}_{< i}^{text}, {x}^{text}\right.\right)$. The first probability distribution model may be a conditional random field (CRF) or a hidden Markov model (HMM).

As an example, a difference operation may be used to calculate a difference between a predicted probability distribution and a reference probability distribution of the text encoding vector sequence with respect to the decoded text and the speech text, and the square or absolute value of the difference may be used as a loss value; or, an exponential operation may be used to calculate a cross-entropy between the predicted probability distribution and the reference probability distribution of the text encoding vector sequence with respect to the decoded text and the speech text as a loss value. For example, if the predicted probability distribution of the text encoding vector sequence with respect to the decoded text and the speech text is p1, and the reference probability distribution is p2, then the difference between the predicted probability distribution and the reference probability distribution of the text encoding vector sequence with respect to the decoded text and the speech text is expressed as p1-p2, and the loss value may be expressed as |p1 - p2|.

In some embodiments, a second probability distribution of the visual encoding vector sequence with respect to the decoded text and the cued speech image sequence may be determined by using a pre-trained second probability distribution model, i.e., a conditional probability distribution of the visual encoding vector sequence conditioned on the decoded text and the cued speech image sequence. The second probability distribution model may be trained in the following mode: first, acquiring a second sample data set, the sample data including a decoded text, a cued speech image sequence, and a reference probability distribution of the visual encoding vector sequence with respect to the decoded text and the cued speech image sequence; then, using the decoded text and the cued speech image sequence in the sample data as inputs of an initialized second probability distribution model, and outputting a predicted probability distribution of the visual encoding vector sequence with respect to the decoded text and the cued speech image sequence; and finally, determining a loss value based on a difference between the predicted probability distribution and the reference probability distribution of the visual encoding vector sequence with respect to the decoded text and the cued speech image sequence, and updating parameters of the second probability distribution model through a backpropagation algorithm based on the loss value.

As an example, the second probability distribution of the visual encoding vector sequence with respect to the decoded text and the cued speech image sequence may be expressed as $p \left(⋅\left|{y}_{< i}^{text}, {x}^{cued - speech}\right.\right)$. The second probability distribution model may be a conditional random field or a hidden Markov model.

As an example, a difference operation may be used to calculate a difference between a predicted probability distribution and a reference probability distribution of the visual encoding vector sequence with respect to the decoded text and the cued speech image sequence, and the square or absolute value of the difference may be used as a loss value; or, an exponential operation may be used to calculate a cross-entropy between the predicted probability distribution and the reference probability distribution of the visual encoding vector sequence with respect to the decoded text and the cued speech image sequence as a loss value.

Operation 1052A: Determine a third probability distribution of the speech text with respect to the cued speech image sequence.

In some embodiments, a third probability distribution of the speech text with respect to the cued speech image sequence, i.e., a conditional probability distribution of the speech text conditioned on the cued speech image sequence, may be determined by using a pre-trained third probability distribution model. The third probability distribution model may be trained in the following mode: first, acquiring a third sample data set, the sample data including a cued speech image sequence and a reference probability distribution of the speech text with respect to the cued speech image sequence; then, using the cued speech image sequence in the sample data as an input of an initialized third probability distribution model, and outputting a predicted probability distribution of the speech text with respect to the cued speech image sequence; and finally, determining a loss value based on a difference between the predicted probability distribution and the reference probability distribution of the speech text with respect to the cued speech image sequence, and updating parameters of the third probability distribution model through a backpropagation algorithm based on the loss value.

As an example, the third probability distribution of the speech text with respect to the cued speech image sequence may be expressed as *p*(*x*^{text}|*x*^{cued-speech}). The third probability distribution model may be a conditional random field or a hidden Markov model. A difference operation may be used to calculate a difference between a predicted probability distribution and a reference probability distribution of the speech text with respect to the cued speech image sequence, and the square or absolute value of the difference may be used as a loss value; for example, if the predicted probability distribution of the speech text with respect to the cued speech image sequence is p3, and the reference probability distribution is p4, then the difference between the predicted probability distribution and the reference probability distribution of the speech text with respect to the cued speech image sequence is expressed as p3-p4, and the loss value may be expressed as ||p3 - p4|; or, an exponential operation may be used to calculate a cross-entropy between the predicted probability distribution and the reference probability distribution of the speech text with respect to the cued speech image sequence as a loss value.

As an example, the speech text includes three items, namely A, B, and C. The reference probability distribution of the speech text with respect to the cued speech image sequence is expressed as *p*₁ = [0.5, 0.3, 0.2], and the predicted probability distribution is expressed as *p*₂ = [0.4, 0.4, 0.2]. The formula for cross-entropy is expressed as formula (1): $H \left(p1,p2\right) = - {\sum }_{i}^{n} {p}_{1 , i} log \left({p}_{2 , i}\right)$ (1)
where *H*(p1, p2)is the cross-entropy between the predicted probability distribution and the reference probability distribution of the speech text with respect to the cued speech image sequence, i.e., the loss value; *n* is the number of the speech text; *p*_{1,*i*} is the probability of an i^{th} speech text in the reference probability distribution with respect to the cued speech image sequence; and *p*_{2,*i*} is the probability of an i^{th} speech text in the predicted probability distribution with respect to the cued speech image sequence.

Then, the loss value is *H*(p1, p2) = -(0.5*log*(0.4) + 0.3*log*(0.4) + 0.2*log*(0.2)) = 0.6388.

Operation 1053A: Determine, in a case that a target language of a speech generation task of the first speech generation model is different from a source language, a fourth probability distribution of the decoded text with respect to the cued speech image sequence.

In some embodiments, when a target language of a speech generation task of the first speech generation model is different from a source language, for example, the target language of the speech generation task of the first speech generation model is English and the source language is Chinese, the source language Chinese needs to be translated into English first.

In some embodiments, a fourth probability distribution of the decoded text with respect to the cued speech image sequence, i.e., a conditional probability distribution of the decoded text conditioned on the cued speech image sequence, may be determined by using a pre-trained fourth probability distribution model. The fourth probability distribution model may be trained in the following mode: first, acquiring a fourth sample data set, the sample data including a cued speech image sequence, a source language speech text, and a reference probability distribution of the decoded text with respect to the cued speech image sequence; then, using the cued speech image sequence and the source language speech text in the sample data as inputs of an initialized fourth probability distribution model, and outputting a predicted probability distribution of the decoded text with respect to the cued speech image sequence; and finally, determining a loss value based on a difference between the predicted probability distribution and the reference probability distribution of the decoded text with respect to the cued speech image sequence, and updating parameters of the fourth probability distribution model through a backpropagation algorithm based on the loss value.

As an example, the fourth probability distribution of the decoded text with respect to the cued speech image sequence may be expressed as $p \left(\left.{y}_{i}^{text}\right|{y}_{< i}^{text},{x}^{cued - speech}\right)$. The fourth probability distribution model may be a conditional random field or a hidden Markov model. A difference operation may be used to calculate a difference between a predicted probability distribution and a reference probability distribution of the decoded text with respect to the cued speech image sequence, and the square or absolute value of the difference may be used as a loss value; or, an exponential operation may be used to calculate a cross-entropy between the predicted probability distribution and the reference probability distribution of the decoded text with respect to the cued speech image sequence as a loss value.

In this embodiment of this application, by calculating the first probability distribution between the text encoding vector sequence and the decoded text and the speech text, and the second probability distribution between the visual encoding vector sequence and the decoded text and the cued speech image sequence, it is possible to ensure consistency and alignment of information between different modalities (text, speech, and vision) during the generation process. Determining the third probability distribution of the speech text with respect to the cued speech image sequence can guide the speech generation model to generate speech text that better matches the cued speech image. In a case that the target language is different from the source language, calculating the fourth probability distribution of the decoded text with respect to the cued speech image sequence helps optimize the effect of cross-language speech generation, which enables the speech generation model to better handle cross-language speech synthesis tasks and generate speech that better conforms to the characteristics and semantics of the target language. By considering the probability distributions of a plurality of types of modality information, the model can better adapt to different types of input data, including text, speech, and visual information. This multimodal processing mode enables the model to more flexibly generate high-quality outputs when facing complex input scenarios.

In some embodiments, referring to FIG. 3I, FIG. 3I is a first schematic flowchart of determining a target loss according to an embodiment of this application. The operation of "determining a target loss based on the probability distributions" in operation 105 of FIG. 3A may be implemented by: based on the probability distributions of the encoding vector sequences of the sample data of the visual modality and the text modality with respect to preset conditions, determining, as described above, a difference between the probability distributions of the encoding vector sequences of the visual modality and the text modality as a sub-target loss of the encoding vector sequences; based on the probability distribution of the speech text with respect to the sample data of the visual modality, determining a sub-target loss of the speech text negatively correlated with the probability distribution; and based on the probability distribution of the decoded text with respect to the sample data of the visual modality, determining a sub-target loss of the speech text negatively correlated with the probability distribution. A detailed description is provided below with reference to operations 1054A to 1057A in FIG. 3I.

Operation 1054A: Determine a difference between the first probability distribution and the second probability distribution as a first sub-target loss.

In some embodiments, a difference between the first probability distribution and the second probability distribution may be determined by way of divergence calculation, for example, Kullback-Leibler (KL) divergence, cross-entropy.

As an example, the first sub-target loss may be determined by formula (2): ${L}_{KD_CS} \left({θ}_{csE}\right) = {\sum }_{i = 1}^{f} {D}_{KL} \left[p\left.\left(\left.⋅\right|{y}_{< i}^{text},{x}^{text}\right)\right‖p\left(\left.⋅\right|{y}_{< i}^{text},{x}^{cued - speech},{x}^{impaired - speech};{θ}_{csE}\right)\right]$ (2)
where $p \left(⋅\left|{y}_{< i}^{text}, {x}^{text}\right.\right)$ is the first probability distribution, $p \left(⋅\left|{y}_{< i}^{text}, {x}^{cued - speech}; {θ}_{csE}\right.\right)$ is the second probability distribution, *y*^{text} is the decoded text corresponding to the target language, *x*^{cued-speech} and *x*^{text} are respectively the cued speech image sequence of the source language and the corresponding source language speech text, and *θ_{csE}* is a parameter of the visual encoder.

Operation 1055A: Determine a second sub-target loss negatively correlated with the third probability distribution.

As an example, the second sub-target loss negatively correlated with the third probability distribution may be determined by formula (3) shown below: ${L}_{CS 2 T} \left({θ}_{csE}, {θ}_{tD}\right) = - log p \left(\left.{x}^{text}\right|{x}^{cued - speech};{θ}_{csE},{θ}_{tD}\right)$ (3)
where *θ_{tD}* is a parameter of the decoder.

Operation 1056A: Determine a third sub-target loss negatively correlated with the fourth probability distribution.

As an example, the third sub-target loss negatively correlated with the fourth probability distribution may be determined by formula (4) shown below: ${L}_{CS 2 TT} \left({θ}_{csE}, {θ}_{tD}\right) = - {\sum }_{i = 1}^{f} log \left({y}_{i}^{text}\left|{y}_{< i}^{text}, {x}^{cued - speech}; {θ}_{csE}, {θ}_{tD}\right.\right)$ (4)

Operation 1057A: Fuse the first sub-target loss, the second sub-target loss, and the third sub-target loss to obtain a first target loss.

As an example, the first sub-target loss, the second sub-target loss, and the third sub-target loss are weighted and summed by formula (5) shown below to obtain a first target loss. $L ∝ {L}_{KD_CS} + {L}_{CS 2 TT} + {αL}_{CS 2 T}$ (5)
where *α* is a weight parameter of the third sub-target loss.

This embodiment of this application comprehensively considers information of three modalities, namely text, speech, and vision, and fully utilizes the complementarity among the three modalities. Text provides semantic information, speech provides prosodic and emotional information, and visual information provides intuitive descriptions of scenes and contexts. In this mode, the model can generate more natural and accurate speech. Through clear probability distribution calculation and loss function design, the model can more efficiently learn relationships among text, speech, and visual information, thereby converging faster during the training process, which helps reduce training time and consumption of computing resources, and improves the model development efficiency.

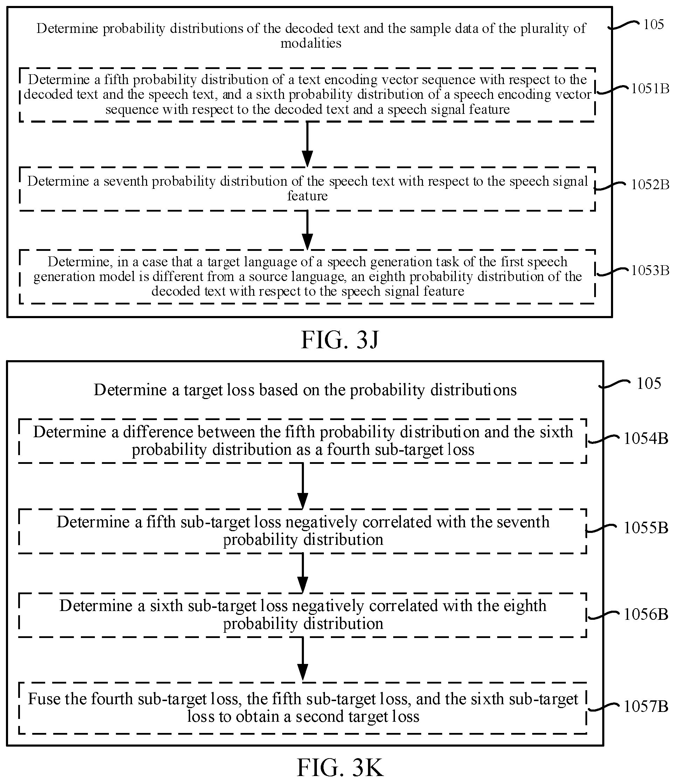

A description is provided below with reference to the architecture of the speech generation model shown in FIG. 4B. Referring to FIG. 3J, FIG. 3J is a second schematic flowchart of determining probability distributions according to an embodiment of this application. The operation of "determining probability distributions of the decoded text and the sample data of the plurality of modalities" in operation 105 of FIG. 3A may also be implemented by: for the encoding vector sequences of the sample data of the speech modality and the text modality, determining, as described above, probability distributions of the encoding vector sequences of the sample data of the speech modality and the text modality with respect to preset conditions; determining a probability distribution of the speech text with respect to the speech signal feature; and determining a probability distribution of the decoded text with respect to the speech signal feature. A detailed description is provided below with reference to operations 1051B to 1053B in FIG. 3J.

Operation 1051B: Determine a fifth probability distribution of a text encoding vector sequence with respect to the decoded text and the speech text, and a sixth probability distribution of a speech encoding vector sequence with respect to the decoded text and a speech signal feature.

In some embodiments, a fifth probability distribution of the text encoding vector sequence with respect to the decoded text and the speech text, i.e., a conditional probability distribution of the text encoding vector sequence conditioned on the decoded text and the speech text, may be determined by using a pre-trained fifth probability distribution model. Here, the fifth probability distribution is only used to distinguish from the first probability distribution described above.

In some embodiments, a sixth probability distribution of the speech encoding vector sequence with respect to the decoded text and the speech signal feature, i.e., a conditional probability distribution of the speech encoding vector sequence conditioned on the decoded text and the speech signal feature, may be determined by using a pre-trained sixth probability distribution model. The sixth probability distribution model may be trained in the following mode: first, acquiring a sixth sample data set, the sample data including a decoded text, a speech signal feature, and a reference probability distribution of the speech encoding vector sequence with respect to the decoded text and the speech signal feature; then, using the decoded text and the speech signal feature in the sample data as inputs of an initialized sixth probability distribution model, and outputting a predicted probability distribution of the speech encoding vector sequence with respect to the decoded text and the speech signal feature; and finally, determining a loss value based on a difference between the predicted probability distribution and the reference probability distribution of the speech encoding vector sequence with respect to the decoded text and the speech signal feature, and updating parameters of the sixth probability distribution model through a backpropagation algorithm based on the loss value.

As an example, the sixth probability distribution of the speech encoding vector sequence with respect to the decoded text and the speech signal feature may be expressed as $p \left(⋅\left|{y}_{< i}^{text}, {x}^{impaired - speech}\right.\right)$ . The sixth probability distribution model may be a conditional random field or a hidden Markov model.

As an example, a difference operation may be used to calculate a difference between a predicted probability distribution and a reference probability distribution of the speech encoding vector sequence with respect to the decoded text and the speech signal feature, and the square or absolute value of the difference may be used as a loss value; or, an exponential operation may be used to calculate a cross-entropy between the predicted probability distribution and the reference probability distribution of the speech encoding vector sequence with respect to the decoded text and the speech signal feature as a loss value.

Operation 1052B: Determine a seventh probability distribution of the speech text with respect to the speech signal feature.

In some embodiments, a seventh probability distribution of the speech text with respect to the speech signal feature, i.e., a conditional probability distribution of the speech text conditioned on the speech signal feature, may be determined by using a pre-trained seventh probability distribution model. The seventh probability distribution model may be trained in the following mode: first, acquiring a seventh sample data set, the sample data including a speech signal feature and a reference probability distribution of the speech text with respect to the speech signal feature; then, using the speech signal feature in the sample data as an input of an initialized seventh probability distribution model, and outputting a predicted probability distribution of the speech text with respect to the speech signal feature; and finally, determining a loss value based on a difference between the predicted probability distribution and the reference probability distribution of the speech text with respect to the speech signal feature, and updating parameters of the seventh probability distribution model through a backpropagation algorithm based on the loss value.

As an example, the seventh probability distribution of the speech text with respect to the speech signal feature may be expressed as *p*(*x*^{text}| *x*^{impaired-speech}). The seventh probability distribution model may be a conditional random field or a hidden Markov model. A difference operation may be used to calculate a difference between a predicted probability distribution and a reference probability distribution of the speech text with respect to the speech signal feature, and the square or absolute value of the difference may be used as a loss value; or, an exponential operation may be used to calculate a cross-entropy between the predicted probability distribution and the reference probability distribution of the speech text with respect to the speech signal feature as a loss value.

Operation 1053B: Determine, in a case that a target language of a speech generation task of the first speech generation model is different from a source language, an eighth probability distribution of the decoded text with respect to the speech signal feature.

In some embodiments, when a target language of a speech generation task of the first speech generation model is different from a source language, an eighth probability distribution of the decoded text with respect to the speech signal feature, i.e., a conditional probability distribution of the decoded text conditioned on the speech signal feature, may be determined by using a pre-trained eighth probability distribution model. The eighth probability distribution model may be trained in the following mode: first, acquiring an eighth sample data set, the sample data including a speech signal feature, a source language speech text, and a reference probability distribution of the decoded text with respect to the speech signal feature; then, using the speech signal feature and the source language speech text in the sample data as inputs of an initialized eighth probability distribution model, and outputting a predicted probability distribution of the decoded text with respect to the speech signal feature; and finally, determining a loss value based on a difference between the predicted probability distribution and the reference probability distribution of the decoded text with respect to the speech signal feature, and updating parameters of the eighth probability distribution model through a backpropagation algorithm based on the loss value.

As an example, the eighth probability distribution of the decoded text with respect to the speech signal feature may be expressed as $p \left(\left.{y}_{i}^{text}\right|{y}_{< i}^{text},{x}^{impaired - speech}\right)$. The eighth probability distribution model may be a conditional random field or a hidden Markov model.

As an example, a difference operation may be used to calculate a difference between a predicted probability distribution and a reference probability distribution of the decoded text with respect to the speech signal feature, and the square or absolute value of the difference may be used as a loss value; or, an exponential operation may be used to calculate a cross-entropy between the predicted probability distribution and the reference probability distribution of the decoded text with respect to the speech signal feature as a loss value.

By using a pre-trained probability distribution model, the conditional probability relationship between the decoded text and the speech signal feature can be more accurately modeled, and complex dependencies between the speech signal feature and the decoded text can be captured, thereby improving the accuracy of cross-language speech generation. This enables the speech generation model to generate text content that better meets user needs according to the user's speech signal feature, thereby providing personalized services.

In some embodiments, referring to FIG. 3K, FIG. 3K is a second schematic flowchart of determining a target loss according to an embodiment of this application. The operation of "determining a target loss based on the probability distributions" in operation 105 of FIG. 3A may also be implemented by: based on the probability distributions of the encoding vector sequences of the sample data of the speech modality and the text modality with respect to preset conditions, determining, as described above, a difference between the probability distributions of the encoding vector sequences of the speech modality and the text modality as a sub-target loss of the encoding vector sequences; a sub-target loss of the speech text negatively correlated with the probability distribution is determined based on the probability distribution of the speech text with respect to the sample data of the speech modality; and determining a sub-target loss of the speech text negatively correlated with the probability distribution based on the probability distribution of the decoded text with respect to the sample data of the speech modality. A detailed description is provided below with reference to operations 1054B to 1057B in FIG. 3K.

Operation 1054B: Determine a difference between the fifth probability distribution and the sixth probability distribution as a fourth sub-target loss.

In some embodiments, a difference between the fifth probability distribution and the sixth probability distribution may be determined by way of divergence calculation, for example, KL divergence, cross-entropy.

As an example, the fourth sub-target loss may be determined by formula (6): ${L}_{KD_IS} \left({θ}_{isE}\right) = {\sum }_{i = 1}^{f} {D}_{KL} \left[p\left(⋅\left|{y}_{< i}^{text}, {x}^{text}\right.\right)\left‖p\left(⋅\left|{y}_{< i}^{text}, {x}^{impaired - speech}; {θ}_{isE}\right.\right)\right.\right]$ (6)
where *x*^{impaired-speech} is the speech signal feature in the sample data, *θ_{isE}* is a parameter of the speech encoder, *y*^{text} is the decoded text corresponding to the target language, *x*^{text} is the source language speech text, $p \left(⋅\left|{y}_{< i}^{text}, {x}^{text}\right.\right)$ is the fifth probability distribution of the text encoding vector sequence with respect to the decoded text and the speech text, and $p \left(⋅\left|{y}_{< i}^{text}, {x}^{cued - speech}; {θ}_{csE}\right.\right)$ is the sixth probability distribution of the speech encoding vector sequence with respect to the decoded text and the speech signal feature.

Operation 1055B: Determine a fifth sub-target loss negatively correlated with the seventh probability distribution.

As an example, the fifth sub-target loss negatively correlated with the seventh probability distribution may be determined by formula (7) shown below: ${L}_{IS 2 T} \left({θ}_{isE}, {θ}_{tD}\right) = - log p \left(\left.{x}^{text}\right|{x}^{impaired - speech};{θ}_{isE},{θ}_{tD}\right)$ (7)

Operation 1056B: Determine a sixth sub-target loss negatively correlated with the eighth probability distribution.

As an example, the sixth sub-target loss negatively correlated with the eighth probability distribution may be determined by formula (8) shown below: ${L}_{IS 2 TT} \left({θ}_{isE}, {θ}_{tD}\right) = - {\sum }_{i = 1}^{f} log \left({y}_{i}^{text}\left| {y}_{< i}^{text}, {x}^{impaired - speech}; {θ}_{isE}, {θ}_{tD}\right.\right)$ (8)

Operation 1057B: Fuse the fourth sub-target loss, the fifth sub-target loss, and the sixth sub-target loss to obtain a second target loss.

As an example, the fourth sub-target loss, the fifth sub-target loss, and the sixth sub-target loss are weighted and summed by formula (9) shown below to obtain a second target loss. $L ∝ {L}_{KD_IS} + {L}_{IS 2 TT} + {αL}_{IS 2 T}$ (9)
where *α* is a weight parameter of the sixth sub-target loss.

In this embodiment of this application, by calculating probability distribution differences between different modalities (e.g., the difference between the fifth probability distribution and the sixth probability distribution) and optimizing them as sub-target losses, more natural and contextually appropriate speech content can be generated. Through clear probability distribution calculation and loss function design, the model can consider a plurality of factors simultaneously during the training process, avoiding overfitting that may result from single-objective optimization. The speech generation model can more efficiently learn relationships between different modality information, thereby converging faster during the training process. This efficient training mode can reduce training time and consumption of computing resources. In summary, by calculating probability distributions between different modalities and optimizing the target loss based on these distributions, the performance of a multimodal model in terms of consistency, generation quality, robustness, and generalization capability can be significantly improved, enabling it to perform more excellently in complex multimodal tasks.

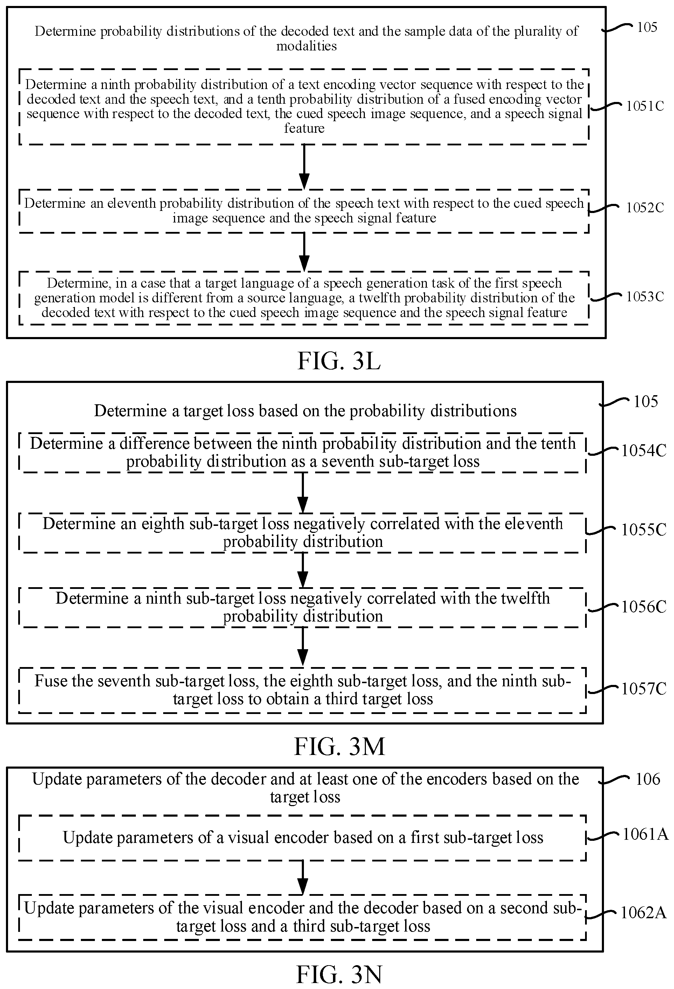

A description is provided below with reference to the architecture of the speech generation model shown in FIG. 4C. Referring to FIG. 3L, FIG. 3L is a third schematic flowchart of determining probability distributions according to an embodiment of this application. The operation of "determining probability distributions of the decoded text and the sample data of the plurality of modalities" in operation 105 of FIG. 3A may also be implemented by: for the encoding vector sequences of the sample data of the visual modality, the speech modality, and the text modality, determining, as described above, probability distributions of the encoding vector sequences of the sample data of the visual modality, the speech modality, and the text modality with respect to preset conditions; determining a probability distribution of the speech text with respect to the cued speech image sequence and the speech signal feature; and determining a probability distribution of the decoded text with respect to the cued speech image sequence and the speech signal feature. A detailed description is provided below with reference to operations 1051C to 1053C in FIG. 3L.

Operation 1051C: Determine a ninth probability distribution of a text encoding vector sequence with respect to the decoded text and the speech text, and a tenth probability distribution of a fused encoding vector sequence with respect to the decoded text, the cued speech image sequence, and a speech signal feature.

In some embodiments, a ninth probability distribution of the text encoding vector sequence with respect to the decoded text and the speech text, i.e., a conditional probability distribution of the text encoding vector sequence conditioned on the decoded text and the speech text, may be determined by using a pre-trained ninth probability distribution model. Here, the ninth probability distribution is only used to distinguish from the first probability distribution described above. For the training process of the ninth probability distribution model, reference may be made to the training process of the first probability distribution model described above.

In some embodiments, a tenth probability distribution of the fused encoding vector sequence with respect to the decoded text, the cued speech image sequence, and the speech signal feature, i.e., a conditional probability distribution of the fused encoding vector sequence conditioned on the decoded text, the cued speech image sequence, and the speech signal feature, may be determined by using a pre-trained tenth probability distribution model. The tenth probability distribution model may be trained in the following mode: first, acquiring a tenth sample data set, the sample data including a decoded text, a cued speech image sequence, a speech signal feature, and a reference probability distribution of the fused encoding vector sequence with respect to the decoded text, the cued speech image sequence, and the speech signal feature; then, using the decoded text, the cued speech image sequence, and the speech signal feature in the sample data as inputs of an initialized tenth probability distribution model, and outputting a predicted probability distribution of the fused encoding vector sequence with respect to the decoded text, the cued speech image sequence, and the speech signal feature; and finally, determining a loss value based on a difference between the predicted probability distribution and the reference probability distribution of the fused encoding vector sequence with respect to the decoded text, the cued speech image sequence, and the speech signal feature, and updating parameters of the tenth probability distribution model through a backpropagation algorithm based on the loss value.

As an example, the tenth probability distribution of the fused encoding vector sequence with respect to the decoded text, the cued speech image sequence, and the speech signal feature may be expressed as $p \left(⋅\left|{y}_{< i}^{text}, {x}^{cued - speech}, {x}^{impaired - speech}\right.\right)$. The tenth probability distribution model may be a conditional random field or a hidden Markov model.

As an example, a difference operation may be used to calculate a difference between a predicted probability distribution and a reference probability distribution of the fused encoding vector sequence with respect to the decoded text, the cued speech image sequence, and the speech signal feature, and the square or absolute value of the difference may be used as a loss value; or, an exponential operation may be used to calculate a cross-entropy between the predicted probability distribution and the reference probability distribution of the fused encoding vector sequence with respect to the decoded text, the cued speech image sequence, and the speech signal feature as a loss value.

Operation 1052C: Determine an eleventh probability distribution of the speech text with respect to the cued speech image sequence and the speech signal feature.

In some embodiments, an eleventh probability distribution of the speech text with respect to the cued speech image sequence and the speech signal feature, i.e., a conditional probability distribution of the speech text conditioned on the cued speech image sequence and the speech signal feature, may be determined by using a pre-trained eleventh probability distribution model. The eleventh probability distribution model may be trained in the following mode: first, acquiring an eleventh sample data set, the sample data including a cued speech image sequence, a speech signal feature, and a reference probability distribution of the speech text with respect to the cued speech image sequence and the speech signal feature; then, using the cued speech image sequence and the speech signal feature in the sample data as inputs of an initialized eleventh probability distribution model, and outputting a predicted probability distribution of the speech text with respect to the cued speech image sequence and the speech signal feature; and finally, determining a loss value based on a difference between the predicted probability distribution and the reference probability distribution of the speech text with respect to the cued speech image sequence and the speech signal feature, and updating parameters of the eleventh probability distribution model through a backpropagation algorithm based on the loss value.

As an example, the eleventh probability distribution of the speech text with respect to the cued speech image sequence and the speech signal feature may be expressed as *p*(*x*^{text}| *x*^{cued-speech}, *x*^{impaired-speech}). The eleventh probability distribution model may be a conditional random field or a hidden Markov model.

As an example, a difference operation may be used to calculate a difference between a predicted probability distribution and a reference probability distribution of the speech text with respect to the cued speech image sequence and the speech signal feature, and the square or absolute value of the difference may be used as a loss value; or, an exponential operation may be used to calculate a cross-entropy between the predicted probability distribution and the reference probability distribution of the speech text with respect to the cued speech image sequence and the speech signal feature as a loss value. For example, if the predicted probability distribution of the speech text with respect to the cued speech image sequence and the speech signal feature is p5, and the reference probability distribution is p6, then the difference between the predicted probability distribution and the reference probability distribution of the speech text with respect to the cued speech image sequence and the speech signal feature is expressed as p5-p6, and the loss value may be expressed as |p5 - p6|.

Operation 1053C: Determine, in a case that a target language of a speech generation task of the first speech generation model is different from a source language, a twelfth probability distribution of the decoded text with respect to the cued speech image sequence and the speech signal feature.

In some embodiments, when a target language of a speech generation task of the first speech generation model is different from a source language, a twelfth probability distribution of the decoded text with respect to the cued speech image sequence and the speech signal feature, i.e., a conditional probability distribution of the decoded text conditioned on the cued speech image sequence and the speech signal feature, may be determined by using a pre-trained twelfth probability distribution model. The twelfth probability distribution model may be trained in the following mode: first, acquiring a twelfth sample data set, the sample data including a cued speech image sequence, a speech signal feature, a source language speech text, and a reference probability distribution of the decoded text with respect to the cued speech image sequence and the speech signal feature; then, using a fused feature of the cued speech image sequence and the speech signal feature in the sample data, and the source language speech text as inputs of an initialized twelfth probability distribution model, and outputting a predicted probability distribution of the decoded text with respect to the cued speech image sequence and the speech signal feature; and finally, determining a loss value based on a difference between the predicted probability distribution and the reference probability distribution of the decoded text with respect to the cued speech image sequence and the speech signal feature, and updating parameters of the twelfth probability distribution model through a backpropagation algorithm based on the loss value.

As an example, the twelfth probability distribution of the decoded text with respect to the cued speech image sequence and the speech signal feature may be expressed as ( ${y}_{i}^{text} \left|{y}_{< i}^{text}\right. , {x}^{cued - speech} , {x}^{impaired - speech}$). The twelfth probability distribution model may be a conditional random field or a hidden Markov model.

As an example, a difference operation may be used to calculate a difference between a predicted probability distribution and a reference probability distribution of the decoded text with respect to the cued speech image sequence and the speech signal feature, and the square or absolute value of the difference may be used as a loss value; or, an exponential operation may be used to calculate a cross-entropy between the predicted probability distribution and the reference probability distribution of the decoded text with respect to the cued speech image sequence and the speech signal feature as a loss value.

In some embodiments, referring to FIG. 3M, FIG. 3M is a third schematic flowchart of determining a target loss according to an embodiment of this application. The operation of "determining a target loss based on the probability distributions" in operation 105 of FIG. 3A may also be implemented by: based on the probability distributions of the encoding vector sequences of the sample data of the visual modality, the speech modality, and the text modality with respect to preset conditions, determining, as described above, a difference between the probability distribution of the fused encoding vector sequence and the probability distribution of the encoding vector sequence of the text modality as a sub-target loss of the encoding vector sequences; a sub-target loss of the speech text negatively correlated with the probability distribution is determined based on the probability distribution of the speech text with respect to the sample data of the visual modality and the speech modality; and determining a sub-target loss of the speech text negatively correlated with the probability distribution based on the probability distribution of the decoded text with respect to the sample data of the visual modality and the speech modality. A detailed description is provided below with reference to operations 1054C to 1057C in FIG. 3M.

Operation 1054C: Determine a difference between the ninth probability distribution and the tenth probability distribution as a seventh sub-target loss.

In some embodiments, a difference between the ninth probability distribution and the tenth probability distribution may be determined by way of divergence calculation, for example, KL divergence, cross-entropy.

As an example, a difference between the ninth probability distribution and the tenth probability distribution may be determined by formula (10) as a seventh sub-target loss. ${L}_{{KD}_{{cs}_{IS}}} \left({θ}_{csE}, {θ}_{isE}\right) = {\sum }_{i = 1}^{f} {D}_{KL} \left[\begin{matrix}p \left.\left(\left.⋅\right|{y}_{< i}^{text},{x}^{text}\right)\right‖ \\ p \left(\left.⋅\right|{y}_{< i}^{text},{x}^{cued - speech},{x}^{impaired - speech};{θ}_{isE},{θ}_{csE}\right)\end{matrix}\right]$ (10)

Operation 1055C: Determine an eighth sub-target loss negatively correlated with the eleventh probability distribution.

As an example, an eighth sub-target loss negatively correlated with the eleventh probability distribution may be determined by formula (11) shown below: ${L}_{{CS}_{IS 2 T}} \left({θ}_{csE}, {θ}_{isE}, {θ}_{tD}\right) = - log p \left(\left.{x}^{text}\right|{x}^{cued - speech},{x}^{impaired - speech};{θ}_{isE},{θ}_{csE},{θ}_{tD}\right)$ (11)

Operation 1056C: Determine a ninth sub-target loss negatively correlated with the twelfth probability distribution.

As an example, a ninth sub-target loss negatively correlated with the twelfth probability distribution may be determined by formula (12) shown below: $\begin{matrix}{L}_{{CS}_{IS 2 TT}} \left({θ}_{csE}, {θ}_{isE}, {θ}_{tD}\right) = \\ {\sum }_{i = 1}^{f} log \left(\left.{y}_{< i}^{text}\right|\right) , {x}^{cued - speech} , {x}^{impaired - speech} ; {θ}_{isE} , {θ}_{csE} , {θ}_{tD}\end{matrix}$ (12)

Operation 1057C: Fuse the seventh sub-target loss, the eighth sub-target loss, and the ninth sub-target loss to obtain a third target loss.

As an example, the seventh sub-target loss, the eighth sub-target loss, and the ninth sub-target loss are weighted and summed by formula (13) shown below to obtain a third target loss. $L ∝ {L}_{KD_CS_IS} + {L}_{CS_IS 2 TT} + {αL}_{CS_IS 2 T}$ (13)
where α is a weight parameter of the ninth sub-target loss.

Continuing to refer to FIG. 3A, the description proceeds with operation 105 above.

Operation 106: Update parameters of the decoder and at least one of the encoders based on the target loss to obtain an updated decoder and a plurality of updated encoders, the updated decoder and the plurality of updated encoders being configured to form a second speech generation model, and the second speech generation model being configured to generate target speech text corresponding to a cued speech image sequence of a target object.

In some embodiments, referring to FIG. 3N, FIG. 3N is a first schematic flowchart of updating parameters according to an embodiment of this application. The operation of "updating parameters of the decoder and at least one of the encoders based on the target loss" in operation 106 of FIG. 3A may be implemented through operations 1061A to 1062A in FIG. 3N, as specifically described below.

Operation 1061A: Update parameters of a visual encoder based on a first sub-target loss.

As an example, as shown in formula (2) above, parameters *θ_{csE}* of the visual encoder are updated based on the first sub-target loss.

Operation 1062A: Update parameters of the visual encoder and the decoder based on a second sub-target loss and a third sub-target loss.

As an example, when the target language of the speech generation task of the first speech generation model is the same as the source language, parameters *θ_{csE}* of the visual encoder and parameters *θ_{tD}* of the decoder are updated based on the second sub-target loss in the mode shown in formula (3) above. When the target language of the speech generation task of the first speech generation model is different from the source language, parameters *θ_{csE}* of the visual encoder and parameters *θ_{tD}* of the decoder are updated based on the third sub-target loss in the mode shown in formula (4) above.

The first sub-target loss reflects a difference between the text encoding vector sequence and the visual encoding vector sequence. By updating parameters of the visual encoder based on this loss, it can be ensured that vectors generated by the visual encoder can be better aligned with text encoding vectors, thereby improving consistency among multimodal information. The second sub-target loss is related to a degree of matching between the speech text and the cued speech image sequence, and the third sub-target loss is related to a negative correlation between the speech text and the cued speech image sequence. By combining these two losses to update parameters of the visual encoder, the visual encoder can better capture features of the cued speech image sequence and generate encoding vectors that better match the speech text and the decoded text, further improving the fusion effect of visual information with other modality information. This updating mode enables the decoder to generate speech text that better conforms to the semantics of the cued speech image, while avoiding generating content that does not match the cued speech image, thereby improving the quality and accuracy of speech generation. By updating parameters with respect to different sub-target losses, the model can better coordinate relationships among text, speech, and visual information. Updating of the visual encoder enables visual information to be better aligned with text and speech information, while updating of the decoder ensures that the generated speech text can better reflect the content of the visual information. This collaborative optimization mode can significantly improve the effect of multimodal information fusion, generating more natural and consistent outputs.

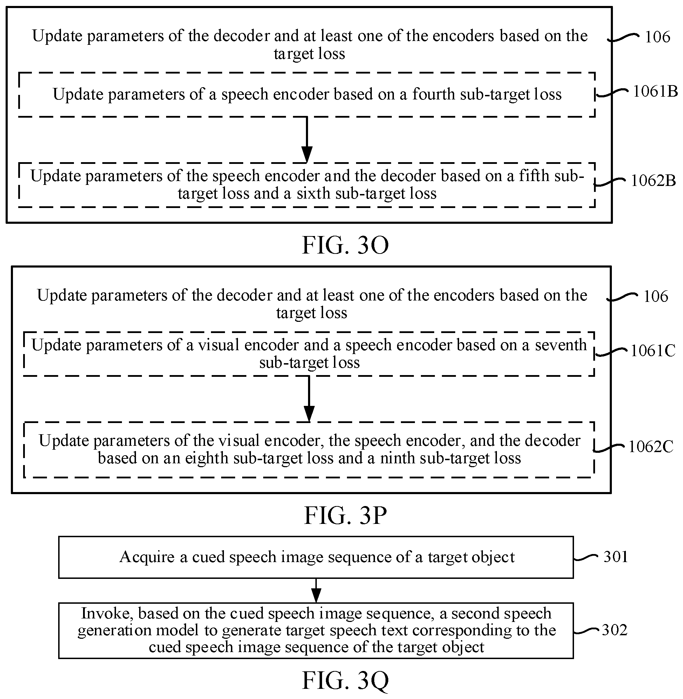

In some embodiments, referring to FIG. 3O, FIG. 3O is a second schematic flowchart of updating parameters according to an embodiment of this application. The operation of "updating parameters of the decoder and at least one of the encoders based on the target loss" in operation 106 of FIG. 3A may be implemented through operations 1061B to 1062B in FIG. 3O, as specifically described below.

Operation 1061B: Update parameters of a speech encoder based on a fourth sub-target loss.

As an example, as shown in formula (6) above, parameters *θ_{isE}* of the speech encoder are updated based on the fourth sub-target loss.

Operation 1062B: Update parameters of the speech encoder and the decoder based on a fifth sub-target loss and a sixth sub-target loss.

As an example, when the target language of the speech generation task of the first speech generation model is the same as the source language, parameters *θ_{isE}* of the speech encoder and parameters *θ_{tD}* of the decoder are updated based on the fifth sub-target loss in the mode shown in formula (7) above. When the target language of the speech generation task of the first speech generation model is different from the source language, parameters *θ_{isE}* of the speech encoder and parameters *θ_{tD}* of the decoder are updated based on the sixth sub-target loss in the mode shown in formula (8) above.

In some embodiments, referring to FIG. 3P, FIG. 3P is a third schematic flowchart of updating parameters according to an embodiment of this application. The operation of "updating parameters of the decoder and at least one of the encoders based on the target loss" in operation 106 of FIG. 3A may be implemented through operations 1061C to 1062C in FIG. 3P, as specifically described below.

Operation 1061C: Update parameters of a visual encoder and a speech encoder based on a seventh sub-target loss.

As an example, as shown in formula (10) above, parameters *θ_{csE}* of the visual encoder and parameters *θ_{isE}* of the speech encoder are updated based on the seventh sub-target loss.

Operation 1062C: Update parameters of the visual encoder, the speech encoder, and the decoder based on an eighth sub-target loss and a ninth sub-target loss.

As an example, when the target language of the speech generation task of the first speech generation model is the same as the source language, parameters *θ_{csE}* of the visual encoder, parameters *θ_{isE}* of the speech encoder, and parameters *θ_{tD}* of the decoder are updated based on the eighth sub-target loss in the mode shown in formula (11) above. When the target language of the speech generation task of the first speech generation model is different from the source language, parameters *θ_{csE}* of the visual encoder, parameters *θ_{isE}* of the speech encoder, and parameters *θ_{tD}* of the decoder are updated based on the ninth sub-target loss in the mode shown in formula (12) above.

In some embodiments, the first speech generation model further includes a speech signal generator, where the speech signal generator is configured to form a second speech generation model together with the decoder and the plurality of updated encoders, and the second speech generation model is configured to generate a speech signal.

As an example, continuing to refer to FIG. 4A, the speech signal generator shown in FIG. 4A includes a text-to-unit module and a unit-to-speech module, and is configured to form a second speech generation model together with the decoder and the plurality of updated encoders. The second speech generation model is configured to generate a speech signal.

By encoding sample data of a plurality of modalities including a cued speech image sequence (corresponding to a visual modality) and speech text (corresponding to a text modality), and calculating a target loss using probability distributions of an obtained multimodal encoding vector sequence (i.e., encoding vector sequences of the plurality of modalities) and the decoded text, the target loss can reflect differences among representation spaces of the plurality of modalities in the first speech generation model. Parameters of the first speech generation model are updated through backpropagation based on the target loss, so that the first speech generation model can gradually learn intrinsic correlations between information of the visual modality and information of the text modality, thereby improving performance and generalization capability of the model. As a result, unification of the representation spaces of the visual modality and the text modality is achieved in the second speech generation model obtained after training. This means that the second speech generation model can map data of different modalities into a common representation space, such that data of different modalities have similar semantic expressions in the space, laying a foundation for subsequent accurate speech text generation, and ensuring that the target speech text outputted by the second speech generation model can accurately conform to an intention expressed by the cued speech image of the target object, thereby ensuring an accuracy of generating speech text from a cued speech image. Meanwhile, compared with related technologies that require manual text input to generate speech text, the present solution is more convenient and efficient, and provides a better user experience.

Hereinafter, a speech generation method for a speech generation model provided in the embodiment of this application will be described. As described above, the electronic device that implements the speech generation method for the speech generation model provided in the embodiment of this application may be a terminal or a server, or a combination thereof. Therefore, the execution subject of each operation will not be repeatedly described below.

Referring to FIG. 3Q, FIG. 3Q is a schematic flowchart of a speech generation method for a speech generation model according to an embodiment of this application, where the speech generation model is the second speech generation model described above. A description will be given below with reference to operations 301 to 302 shown in FIG. 3Q.

Operation 301: Acquire a cued speech image sequence of a target object.

In some embodiments, each cued speech image in the cued speech image sequence shows a static image of a hand or lip posture of a sample object at a certain video frame moment when the sample object performs a body movement or a lip movement.

As an example, the cued speech image sequence of a target object may be acquired by way of camera shooting, an image database, a network source, or the like.

Operation 302: Invoke, based on the cued speech image sequence, a second speech generation model to generate target speech text corresponding to the cued speech image sequence of the target object.

In some embodiments, based on the cued speech image sequence, the second speech generation model described above may be invoked to generate target speech text corresponding to the cued speech image sequence of the target object.

In some embodiments, based on the target speech text generated by the speech generation model, corresponding target speech may be further generated by a speech signal generator in the speech generation model.

In this embodiment of this application, based on sample data of a plurality of modalities of a sample object, the first speech generation model is trained in three parallel modes: 1) encoding based on sample data of a visual modality and a text modality, and invoking a text decoder to decode encoding results of a visual encoder and a text encoder respectively, to update parameters of the visual encoder; 2) encoding based on sample data of a visual modality, a text modality, and a speech modality, and invoking a text decoder to decode encoding results of a visual encoder, a text encoder, and a speech encoder respectively, to update parameters of the speech encoder; and 3) encoding based on sample data of a visual modality, a text modality, and a speech modality, fusing encoding results corresponding to the visual modality and the text modality, and then invoking a text decoder to decode the fused encoding result and an encoding result of the text encoder respectively, to update parameters of the visual encoder and the speech encoder. This enables the speech generation model to fully learn features of different modalities, i.e., a visual modality, a text modality, and a speech modality, thereby improving the capability of the speech generation model to perform speech generation tasks and improving the accuracy of speech generation. Meanwhile, different modality combination modes can ensure that the execution of speech generation tasks can adapt to different application scenarios, thereby improving user experience.

Hereinafter, an exemplary application of this embodiment of this application in a scenario of providing fluent speech for a target object with hearing or speech impairments will be described.

A terminal acquires a visual expression of a target object with hearing or speech impairments from cued speech (which corresponds to the cued speech image sequence described above), and uploads the visual expression of the target object to a server; the server recognizes the received visual expression of the target object by using the trained second speech generation model, generates target speech text corresponding to the visual expression, and transmits the target speech text to the terminal; and the terminal then outputs speech corresponding to the target speech text; or, the server recognizes the visual expression of the target object based on the visual expression of the target object, generates target speech text corresponding to the visual expression, and generates corresponding speech based on the target speech text, and then transmits the speech to the terminal for playback. The training process of the speech generation model will be described in detail below.

For persons with hearing or speech impairments, lip reading or sign language are the main way of communication. However, lip reading makes it difficult to distinguish pronunciations with similar lip shapes, for example, [u] and [y]. Sign language requires a relatively long time to learn before one can communicate with others. In related technologies, a cued speech system performs hand coding on finger shapes and hand positions, and combines this with lip reading to provide users with hearing or speech impairments with a clear visual representation of all phonemes in spoken language.

Referring to FIG. 7, FIG. 7 is a schematic diagram of cued speech encoding information according to an embodiment of this application. As shown in FIG. 7, five different hand positions are used to encode vowel groups in Mandarin, and eight different hand shapes are used to encode consonant groups in Mandarin. Through cued speech, persons with hearing impairments can distinguish pronunciations that cannot be distinguished by lip reading by combining hand information. However, the cued speech system encodes visual expressions provided by a cued speech user based on the user's hand movements and lip movements. On the one hand, it cannot output smooth, natural, and universal speech expressions. On the other hand, it is not applicable to non-cued speech users.

The speech engine technology in related technologies can clone a person's voice with only a 15-second speech sample, and supports cross-language capabilities. A user can select an exclusive natural human voice instead of a synthetic voice with significant mechanical tones, and the timbre consistency can be maintained across various languages. This technology can provide support for Augmentative and Alternative Communication (AAC) devices, providing personalized voices across a plurality of languages for users who are unable to speak, thereby assisting non-speaking populations, for example, providing therapeutic applications for users with speech-affecting disorders, and providing educational enhancement services for users with learning needs. However, the core of the speech engine technology in the related technologies is a speech synthesis and cloning method that requires a user to input text into an application, and the text is then converted into speech. This mode of communication and expression cannot support streaming real-time expression.

The method provided in this embodiment of this application encodes a visual expression from cued speech and maps it to a representation space that is unified with the mapping spaces of a text modality and a speech modality in a speech recognition translation and synthesis engine (which corresponds to the speech recognition model described above). Based on the cued speech of a target object with hearing or speech impairments, the method can directly generate corresponding fluent speech, providing the target object with customizable, natural, and smooth voices across a plurality of languages, thereby helping the target object to communicate with others without barriers.

Referring to FIG. 8, FIG. 8 is a schematic diagram of training data according to an embodiment of this application. As shown in FIG. 8, the training data includes cued speech of a visual modality, phonemes and audio of a speech modality, and text of a text modality. To construct a latent representation space of a visual modality that is shared with a speech modality and a text modality, the training data first needs to be preprocessed and encoded.

Referring to FIG. 9, FIG. 9 is an architectural diagram of a visual encoding model according to an embodiment of this application. As shown in FIG. 9, first, preprocessing is performed on a video of a target object, and key points of each frame of the video are extracted to obtain a key point sequence. The indication of key points of the visual modality (CS key points) include coordinate positions of a total of *J* key points such as lips, fingers, and hands.

Second, the key point sequence of each frame of the video is inputted into a visual encoder. The key point information inputted into the visual encoder (CS Encoder) is expressed as ${x}^{cued - speech} ∈ {ℝ}^{F \times J \times C}$, where *F* represents the total number of video frames, and *C* represents the coordinate dimension of the key points, for example, when the key point coordinates are in 2D, *C* = 2, and when the key point coordinates are in 3D, *C* = 3. Then, pose embedding is performed on the key point sequence, and encoding is performed through a Transformer block to obtain a visual encoding vector sequence.

A state-of-the-art (SOTA) pose detection foundation model may be used as a pre-training foundation model for the visual encoder. Based on using high-resource human pose data to train and obtain a pre-trained visual encoder, low-resource cued speech training data (e.g., the training data shown in FIG. 8) is used to fine-tune parameters of the pre-trained visual encoder model.

To reduce redundant information in a video while preserving the diversity and integrity of semantic information, related technologies employ a clustering pruning technique. A density peaks clustering based on K-nearest neighbors (DPC-KNN) algorithm is used to cluster a token sequence of input *F* frames according to similarity. Based on two criteria, namely, having a higher density compared with neighboring tokens and having a greater distance from other high-density tokens, *f* frames with higher scores are selected as cluster centers, i.e., key tokens retained after pruning, where *f* is much smaller than the original sequence length *F* (*f* « *F*).

Different from the clustering pruning technique in related technologies, in this embodiment of this application, when fine-tuning a pre-trained visual encoding model, a visual encoding vector sequence obtained by encoding by a visual encoder is aligned to an output feature space of a text encoder, thereby ensuring semantic integrity of the former. This includes the following two aspects of processing. Referring to FIG. 4A, FIG. 4A is a first schematic architectural diagram of a speech generation model (CSeamless) according to an embodiment of this application.

First, sequence length alignment processing is performed. The visual encoding vector sequence (with a sequence length of *F*) obtained by encoding by the visual encoder is passed through a length adaptor to align with the output sequence length *f* of the text encoder. The length adaptor may be a length adaptor based on a Transformer structure in SEAMLESSM4T V2.

By aligning the lengths of the feature vector sequences of the visual modality and the text modality, the length of the visual encoding vector sequence is compressed from *F* to *f* (*f* « *F*). At this time, the output of the visual encoder is ${{x}^{˜}}^{cued - speech} ∈ {ℝ}^{f \times D}$, where *D* represents the dimension of features input from the text encoder to the text decoder, thereby improving the processing efficiency of the visual encoding model.

Then, feature space alignment processing is performed. Using knowledge distillation as shown in formula (2) above as a target function, feature space alignment processing is performed on the output of the visual encoder and the output of the text encoder, to distill knowledge from a powerful text-to-text machine translation foundation large model (e.g., SEAMLESSM4T-NLLB), thereby guiding the task from a visual expression of cued speech to text (and text translation), i.e., the task from a visual modality to a text modality, thus ensuring that semantic integrity is maintained while the output sequence of the visual encoder is compressed.

Here, *x*^{cued-speech} and x^{text} are respectively the cued speech of a source language and the corresponding source text, and y^{text} is the text corresponding to a target language. In this embodiment of this application, the source language is Chinese, and the target languages include Chinese and English. When the target language is English, a pseudo label y^{text} is obtained by performing text translation from Chinese to English on the source text x^{text}. When the target language is the same as the source language, this corresponds to a recognition task from cued speech to text (CS2T).

By fixing the pre-trained text encoder, joint fine-tuning is performed on parameters *θ_{csE}* of the visual encoder (CS Encoder) and parameters *θ_{tD}* of the text decoder shown in FIG. 4A. The loss function 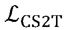 of the corresponding recognition task and the loss function 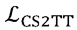 of the translation task are used as additional fine-tuning training objective functions. The loss function 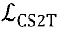 of the recognition task and the loss function 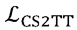 of the translation task are respectively shown in formula (3) and formula (4) above.

In summary, the overall fine-tuning training loss function of the first architecture of the speech generation model provided in this embodiment of this application is shown in formula (5) above, where α is a weight parameter determined by a proportion of a fine-tuning training set in a total training set.

As an example, the text encoder and the text decoder shown in FIG. 4A may adopt a Transformer-based text encoding and decoding (Text Encoder & Decoder) model of SEAMLESSM4T-NLLB and pre-trained weights, and fix the weights of the text encoder to perform the above joint fine-tuning training on parameters of the text decoder; the text-to-unit (Text2Unit) module may adopt a non-autoregressive (NAR) T2U model and weights in SEAMLESSM4T V2; and the unit-to-speech (Unit Vocoder) module may adopt a unit vocoder model based on a High-Fidelity Generative Adversarial Network (HiFi-GAN) in SEAMLESSM4T V2.

In the practical application process of a cued speech system, while expressing hand movements and lip movements, a hearing-impaired person also produces impaired voice or unvoiced sound. The actual condition of impaired vocalization varies from person to person. Some have a milder degree of impairment and can produce discernible sounds, while others have a severe impairment, making the sounds they produce difficult to discern. Such impaired speech plays an auxiliary role in improving the accuracy and intelligibility of communication and expression in practice. Therefore, an impaired speech encoding model may also be incorporated for training during the training process of the speech generation model.

Referring to FIG. 4B, FIG. 4B is a second schematic architectural diagram of a speech generation model according to an embodiment of this application. As shown in FIG. 4B, compared with the training architecture of the speech generation model shown in FIG. 4A, a speech encoder (impaired-speech encoder, IS Encoder) is added. The speech encoder in SEAMLESSM4T V2 may be used as an initialized speech encoder, and a length adaptor of a speech modality is used to align the length of a speech encoding vector sequence of the speech modality with the length of a text vector sequence of a text modality. Then, a low-resource impaired speech data set (referring to speech where the speaker is unable to produce normal, clear, and fluent sounds due to physiological or pathological reasons) is used to fine-tune the speech encoder.

As shown in FIG. 4B, an 80-dimensional spectral feature ${x}^{impaired - speech} ∈ {ℝ}^{F ′ \times 80}$ is extracted from the impaired speech by using a Mel-filterbank extractor, where *F*' represents the total number of speech frames, which is used as an input to the speech encoder. Using knowledge distillation as shown in formula (6) above as a target function, feature space alignment processing is performed on the output of the speech encoder and the output of the text encoder.

Here, x^{impaired-speech} and x^{text} are respectively the impaired speech of a source language and the corresponding source text, and y^{text} is the text corresponding to a target language. When the target language is English, a pseudo label y^{text} is obtained by performing text translation from Chinese to English on the source text x^{text}. When the target language is the same as the source language (Chinese), this corresponds to a recognition task from impaired speech to text (IS2T).

By fixing the pre-trained text encoder, joint fine-tuning is performed on parameters *θ_{isE}* of the speech encoder (IS Encoder) and parameters *θ_{tD}* of the text decoder shown in FIG. 4B, and the recognition loss function 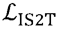 and the translation loss function 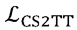 are used as additional fine-tuning training objective functions. The recognition loss function 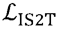 and the translation loss function 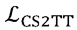 are respectively shown in formula (7) and formula (8) above.

In summary, the overall fine-tuning training loss function of the second architecture of the speech generation model provided in this embodiment of this application is shown in formula (9) above.

In practical application scenarios, the cued speech of the visual modality and the impaired speech of the speech modality have a strong correlation. By jointly expressing the cued speech of the visual modality and the impaired speech of the speech modality, a hearing-impaired person can improve the accuracy and intelligibility of communication and expression. Therefore, the visual encoder and the speech encoder may be jointly trained during the training process of the speech generation model.

Referring to FIG. 4C, FIG. 4C is a third schematic architectural diagram of a speech generation model according to an embodiment of this application. As shown in FIG. 4C, the output ${{x}^{˜}}^{impaired - speech} ∈ {ℝ}^{f \times D}$ of the speech encoder from impaired speech and the output ${{x}^{˜}}^{cued - speech} ∈ {ℝ}^{f \times D}$ of the visual encoder may be passed through a concatenation projector module to experience concatenation processing first to obtain $\left({{x}^{˜}}^{cued - speech}, {{x}^{˜}}^{impaired - speech}\right) ∈ {ℝ}^{f \times 2 D}$ *,* then experience mapping processing to obtain ${{x}^{˜}}^{cued - impaired - speech} ∈ {ℝ}^{f \times D}$*,* and then experience alignment with the feature space of the output of the text encoder. The objective function of knowledge distillation corresponding to feature vector sequence alignment is shown in formula (10) above.

In formula (10), x^{cued-speech}, x^{impaired-speech} and x^{text} are respectively the cued speech, the impaired speech, and the corresponding text of a source language, and y^{text} is the text corresponding to a target language. When the target language is English, a pseudo label y^{text} is obtained by performing text translation from Chinese to English on the source text x^{text}. When the target language is the same as the source language (Chinese), this corresponds to a recognition task from combined cued speech and impaired speech to text (CS_IS2T).

By fixing the pre-trained text encoder, joint fine-tuning is performed on parameters *θ_{csE}* of the visual encoder (CS Encoder), parameters *θ_{isE}* of the speech encoder (IS Encoder), and parameters *θ_{tD}* of the text decoder shown in FIG. 4C, and the recognition loss function 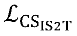 and the translation loss function 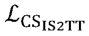 are added as additional fine-tuning training objective functions. The recognition loss function 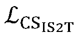 and the translation loss function 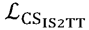 are respectively shown in formula (11) and formula (12) above.

In summary, the overall fine-tuning training loss function of the third architecture of the speech generation model provided in this embodiment of this application is shown in formula (13) above.

Through the above training method, corresponding fluent speech can be directly generated based on the cued speech of persons who are unable to speak or have speech impairments, supporting streaming real-time speech output. At the same time, it supports the generation of cross-language, natural, and smooth voices, and allows users to select their own voice timbre. This can help more persons with hearing impairments, hearing loss, or speech impairments to integrate into the digital society better and faster.

The implementation of an apparatus 555-1 for training a speech generation model provided in an embodiment of this application as software modules will be described below. In some embodiments, as shown in FIG. 2A, the software modules stored in the apparatus 555-1 for training the speech generation model in the memory 550-1 may include:
an acquisition module 5551-1, configured to acquire a first speech generation model, the first speech generation model including a decoder and a plurality of encoders respectively corresponding to a plurality of modalities; and acquire sample data of the plurality of modalities, the sample data of the plurality of modalities including a cued speech image sequence of a sample object and speech text corresponding to the cued speech image sequence;
an encoding module 5552-1, configured to invoke the plurality of encoders respectively for encoding based on the cued speech image sequence and the speech text to obtain a multimodal encoding vector sequence;
a decoding module 5553-1, configured to invoke the decoder for decoding based on the multimodal encoding vector sequence to obtain decoded text;
a determination module 5554-1, configured to determine probability distributions of the decoded text and the sample data of the plurality of modalities, and determine a target loss based on the probability distributions; and
a generation module 5555-1, configured to update parameters of the decoder and at least one of the encoders based on the target loss to obtain an updated decoder and a plurality of updated encoders, the updated decoder and the plurality of updated encoders being configured to form a second speech generation model, and the second speech generation model being configured to generate target speech text corresponding to a cued speech image sequence of a target object.

In some embodiments, when the plurality of modalities include a visual modality and a text modality, the encoding module 5552-1 is further configured to invoke a visual encoder to encode the cued speech image sequence to obtain a visual encoding vector sequence of the visual modality, the visual encoder being an encoder corresponding to the visual modality among the plurality of encoders; invoke a text encoder to encode a plurality of morphemes in the speech text respectively to obtain a text encoding vector sequence of the text modality, the text encoding vector sequence including text encoding vectors respectively corresponding to the plurality of morphemes, and the text encoder being an encoder corresponding to the text modality among the plurality of encoders; and use the visual encoding vector sequence and the text encoding vector sequence as a first multimodal encoding vector sequence, the first multimodal encoding vector sequence being configured for decoding by the decoder.

In some embodiments, the encoding module 5552-1 is further configured to recognize a plurality of cued speech images in the cued speech image sequence respectively to obtain a position of a key point in each of the cued speech images; generate a key point sequence based on the position of the key point in each of the cued speech images; acquire an embedding vector of the key point sequence; and invoke the visual encoder to encode the embedding vector to obtain the visual encoding vector sequence of the visual modality.

In some embodiments, the determination module 5554-1 is further configured to determine, with respect to preset conditions, probability distributions of encoding vector sequences of sample data of at least two modalities, different modalities corresponding to different preset conditions; determine a probability distribution of the speech text with respect to sample data of at least one of the modalities; and determine a probability distribution of the decoded text with respect to sample data of at least one of the modalities.

In some embodiments, the determination module 5554-1 is further configured to determine a first probability distribution of the text encoding vector sequence with respect to the decoded text and the speech text, and a second probability distribution of the visual encoding vector sequence with respect to the decoded text and the cued speech image sequence; determine a third probability distribution of the speech text with respect to the cued speech image sequence; determine, in a case that a target language of a speech generation task of the first speech generation model is different from a source language, a fourth probability distribution of the decoded text with respect to the cued speech image sequence; determine a difference between the first probability distribution and the second probability distribution as a first sub-target loss; determine a second sub-target loss negatively correlated with the third probability distribution; determine a third sub-target loss negatively correlated with the fourth probability distribution; and fuse the first sub-target loss, the second sub-target loss, and the third sub-target loss to obtain a first target loss.

In some embodiments, the determination module 5554-1 is further configured to invoke a pre-trained first probability distribution model to determine a first probability distribution of the text encoding vector sequence with respect to the decoded text and the speech text, where the first probability distribution model is trained by: acquiring first sample data, the first sample data including a sample decoded text, a sample speech text, and a reference probability distribution of a sample text encoding vector sequence with respect to the sample decoded text and the sample speech text; use the sample decoded text, the sample speech text, and the sample text encoding vector sequence as inputs of an initialized first probability distribution model, and output a predicted probability distribution of the text encoding vector sequence with respect to the sample decoded text and the sample speech text; determine a loss value based on a difference between the predicted probability distribution and the reference probability distribution; and update parameters of the first probability distribution model according to the loss value.

In some embodiments, the generation module 5555-1 is further configured to update parameters of the visual encoder based on the first sub-target loss; and update parameters of the visual encoder and the decoder based on the second sub-target loss and the third sub-target loss.

In some embodiments, the first speech generation model is a pre-trained speech recognition model, and after pre-training, a representation space of the text modality and a representation space of the speech modality of the first speech generation model have been unified into the same representation space; the decoding module 5553-1 is further configured to map the visual encoding vector sequence and the text encoding vector sequence to obtain vector sequence representations of the visual encoding vector sequence and the text encoding vector sequence in the representation space; and adjust a length of the vector sequence representation of the visual encoding vector sequence to be equal to a length of the vector sequence representation of the text encoding vector sequence.

In some embodiments, when the plurality of modalities further include a speech modality, the sample data of the plurality of modalities further includes a speech signal feature of the speech modality; the encoding module 5552-1 is further configured to invoke a speech encoder to encode the speech signal feature to obtain the speech encoding vector sequence of the speech modality, the speech encoder being an encoder corresponding to the speech modality among the plurality of encoders; and use the visual encoding vector sequence, the text encoding vector sequence, and the speech encoding vector sequence as a second multimodal encoding vector sequence, the second multimodal encoding vector sequence being configured to replace the first multimodal encoding vector sequence for decoding by the decoder.

In some embodiments, the determination module 5554-1 is further configured to determine a fifth probability distribution of the text encoding vector sequence with respect to the decoded text and the speech text, and a sixth probability distribution of the speech encoding vector sequence with respect to the decoded text and the speech signal feature; determine a seventh probability distribution of the speech text with respect to the speech signal feature; and determine, in a case that a target language of a speech generation task of the first speech generation model is different from a source language, an eighth probability distribution of the decoded text with respect to the speech signal feature; determine a difference between the fifth probability distribution and the sixth probability distribution as a fourth sub-target loss; determine a fifth sub-target loss negatively correlated with the seventh probability distribution; determine a sixth sub-target loss negatively correlated with the eighth probability distribution; and fuse the fourth sub-target loss, the fifth sub-target loss, and the sixth sub-target loss to obtain a second target loss.

In some embodiments, the generation module 5555-1 is further configured to update parameters of the speech encoder based on the fourth sub-target loss; and update parameters of the speech encoder and the decoder based on the fifth sub-target loss and the sixth sub-target loss.

In some embodiments, when the plurality of modalities further include a speech modality, the encoding module 5552-1 is further configured to invoke the plurality of encoders respectively for encoding based on the cued speech image sequence and the speech text to obtain a visual encoding vector sequence of a visual modality, a text encoding vector sequence of a text modality, and a speech encoding vector sequence of the speech modality; perform feature concatenation on the visual encoding vector sequence and the speech encoding vector sequence to obtain a concatenated encoding vector sequence; perform feature mapping on the concatenated encoding vector sequence to obtain a fused encoding vector sequence; and use the fused encoding vector sequence and the text encoding vector sequence as a third multimodal encoding vector sequence, the third multimodal encoding vector sequence being configured to replace the second multimodal encoding vector sequence for decoding by the decoder.

In some embodiments, the sample data of the plurality of modalities further includes a speech signal feature of a speech modality, and the encoding module 5552-1 is further configured to invoke a visual encoder to encode the cued speech image sequence to obtain a visual encoding vector sequence of the visual modality, the visual encoder being an encoder corresponding to the visual modality among the plurality of encoders; invoke a text encoder to encode a plurality of morphemes in the speech text respectively to obtain a text encoding vector sequence of the text modality, the text encoding vector sequence including text encoding vectors respectively corresponding to the plurality of morphemes, and the text encoder being an encoder corresponding to the text modality among the plurality of encoders; and invoke a speech encoder to encode the speech signal feature to obtain the speech encoding vector sequence of the speech modality, the speech encoder being an encoder corresponding to the speech modality among the plurality of encoders.

In some embodiments, the determination module 5554-1 is further configured to determine a ninth probability distribution of the text encoding vector sequence with respect to the decoded text and the speech text, and a tenth probability distribution of the fused encoding vector sequence with respect to the decoded text, the cued speech image sequence, and the speech signal feature; determine an eleventh probability distribution of the speech text with respect to the cued speech image sequence and the speech signal feature; and determine, in a case that a target language of a speech generation task of the first speech generation model is different from a source language, a twelfth probability distribution of the decoded text with respect to the cued speech image sequence and the speech signal feature; determine a difference between the ninth probability distribution and the tenth probability distribution as a seventh sub-target loss; determine an eighth sub-target loss negatively correlated with the eleventh probability distribution; determine a ninth sub-target loss negatively correlated with the twelfth probability distribution; and fuse the seventh sub-target loss, the eighth sub-target loss, and the ninth sub-target loss to obtain a third target loss.

In some embodiments, the generation module 5555-1 is further configured to update parameters of the visual encoder and the speech encoder based on the seventh sub-target loss; and update parameters of the visual encoder, the speech encoder, and the decoder based on the eighth sub-target loss and the ninth sub-target loss.

In some embodiments, the first speech generation model further includes a speech signal generator, where the speech signal generator is configured to form a second speech generation model together with the decoder and the plurality of updated encoders, and the second speech generation model is configured to generate a speech signal.

The implementation of a speech generation apparatus 555-2 for a speech generation model provided in an embodiment of this application as software modules will be described below. In some embodiments, as shown in FIG. 2B, the software modules stored in the apparatus 555-2 for training the speech generation model in the memory 550-2 may include:
an acquisition module 5551- 2, configured to acquire a cued speech image sequence of a target object; and
a generation module 5552-2, configured to invoke, based on the cued speech image sequence, the second speech generation model to generate target speech text corresponding to the cued speech image sequence of the target object.

An embodiment of this application provides a computer program product, the computer program product including a computer program or computer-executable instructions, the computer program or computer-executable instructions being stored in a computer-readable storage medium. A processor of an electronic device reads the computer-executable instructions from the computer-readable storage medium, and the processor executes the computer-executable instructions, causing the electronic device to execute the method for training the speech generation model according to the embodiment of this application, or the speech generation method for the speech generation model according to the embodiment of this application.

An embodiment of this application provides a computer-readable storage medium, having computer-executable instructions or a computer program stored therein, the computer-executable instructions or the computer program, when executed by a processor, causing the processor to execute the method for training the speech generation model according to the embodiment of this application, such as the method for training the speech generation model shown in FIG. 3A, or the speech generation method for the speech generation model according to the embodiment of this application, such as the speech generation method for the speech generation model shown in FIG. 3Q.

In some embodiments, the computer-readable storage medium may be a memory such as an RAM, an ROM, a flash memory, a magnetic surface memory, an optical disk, or a CD-ROM, or may be various devices including one or any combination of the above-mentioned memories.

In some embodiments, the computer-executable instruction may be written in a form of a program, software, a software module, a script, or code according to a programming language (including a compiler or interpreter language or a declarative or procedural language) in any form, and may be deployed in any form, including an independent program or a module, a component, a subroutine, or another unit suitable for use in a computing environment.

As an example, the computer-executable instruction may, but do not necessarily, correspond to a file in a file system, and may be stored in a part of a file that saves another program or other data. For example, the computer-executable instruction may be stored in one or more scripts in a hypertext markup language (HTML) file, stored in a single file that is specially configured for a program in discussion, or stored in a plurality of collaborative files (for example, stored in files of one or more modules, subprograms, or code parts).

As an example, the computer-executable instructions may be deployed to be executed on an electronic device, or deployed to be executed on a plurality of electronic devices at the same location, or deployed to be executed on a plurality of electronic devices that are distributed in a plurality of locations and interconnected by using a communication network.

In summary, in the embodiments of this application, by invoking a plurality of encoders to respectively encode sample data of a plurality of modalities at least including a cued speech image sequence (corresponding to a visual modality) of the target object and speech text (corresponding to a text modality), and calculating a target loss using probability distributions of an obtained multimodal encoding vector sequence (i.e., encoding vector sequences of the plurality of modalities) and the decoded text, the target loss can reflect differences among representation spaces of the plurality of modalities in the first speech generation model. Parameters of the first speech generation model are updated through backpropagation based on the target loss, so that the first speech generation model can gradually learn intrinsic correlations between information of the visual modality and information of the text modality, thereby improving performance and generalization capability of the model. As a result, unification of the representation spaces of the visual modality and the text modality is achieved in the second speech generation model obtained after training. This means that the second speech generation model can map data of different modalities into a common representation space, such that data of different modalities have similar semantic expressions in the space, laying a foundation for subsequent accurate speech text generation, and ensuring that the target speech text outputted by the second speech generation model can accurately conform to an intention expressed by the cued speech image of the target object, thereby ensuring an accuracy of generating speech text from a cued speech image. Meanwhile, compared with related technologies that require manual text input to generate speech text, the present solution is more convenient and efficient, and provides a better user experience. The training process for the first speech generation model is performed based on a pre-trained speech recognition model. Based on the representation space of the text modality and the representation space of the speech modality having been unified into the same representation space, the conversion function from a cued speech image sequence to speech text can be implemented based on the original functions of the pre-trained speech recognition model through fine-tuning. At the same time, a plurality of functions of the pre-trained speech recognition model itself can be reused, such as recognizing a cued speech image sequence of a target object, text translation, and speech generation, thereby avoiding repeated development and improving development efficiency.

What are described above are merely embodiments of this application and are not intended to limit the scope of protection of this application. Any modifications, equivalent substitutions, improvements, and the like made within the spirit and scope of this application shall be included within the scope of protection of this application.

## Claims

1. A method for training a speech generation model, executable by an electronic device, and the method comprising:
acquiring a first speech generation model comprising a decoder and a plurality of encoders each corresponding to a respective modality of a plurality of modalities;
acquiring sample data of the plurality of modalities, the sample data comprising a cued speech image sequence of a sample object and a speech text corresponding to the cued speech image sequence;
encoding, by the plurality of encoders, the cued speech image sequence and the speech text to generate a multimodal encoding vector sequence;
decoding, by the decoder, the multimodal encoding vector sequence to generate a decoded text;
determining probability distributions of the decoded text and the sample data of the plurality of modalities, and determining a target loss based on the probability distributions; and
updating parameters of the decoder and at least one of the plurality of encoders based on the target loss to obtain an updated decoder and a plurality of updated encoders, the updated decoder and the plurality of updated encoders forming a second speech generation model.

2. The method according to claim 1, wherein when the plurality of modalities comprise a visual modality and a text modality, the encoding, by the plurality of encoders, the cued speech image sequence and the speech text to generate a multimodal encoding vector sequence comprises:
encoding, by a visual encoder of the plurality of encoders, the cued speech image sequence to obtain a visual encoding vector sequence of the visual modality, the visual encoder corresponding to the visual modality;
encoding, by a text encoder of the plurality of encoders, a plurality of morphemes in the speech text to obtain a text encoding vector sequence of the text modality, the text encoding vector sequence comprising text encoding vectors corresponding to the plurality of morphemes, and the text encoder corresponding to the text modality; and
using the visual encoding vector sequence and the text encoding vector sequence as a first multimodal encoding vector sequence, the first multimodal encoding vector sequence being configured for decoding by the decoder.

3. The method according to claim 2, wherein the encoding, by a visual encoder, the cued speech image sequence to obtain a visual encoding vector sequence of the visual modality comprises:
recognizing a plurality of cued speech images in the cued speech image sequence to obtain a position of a key point in each of the plurality of cued speech images;
generating a key point sequence based on the position of the key point in each of the plurality of cued speech images;
acquiring an embedding vector of the key point sequence; and
encoding, by the visual encoder, the embedding vector to obtain the visual encoding vector sequence of the visual modality.

4. The method according to claim 2 or 3, wherein the determining probability distributions of the decoded text and the sample data of the plurality of modalities comprises:
determining, with respect to preset conditions, probability distributions of encoding vector sequences of sample data of at least two modalities, different modalities corresponding to different preset conditions;
determining a probability distribution of the speech text with respect to sample data of at least one of the modalities; and
determining a probability distribution of the decoded text with respect to sample data of at least one of the modalities.

5. The method according to any one of claims 2 to 4, wherein
the determining probability distributions of the decoded text and the sample data of the plurality of modalities comprises:
determining a first probability distribution of the text encoding vector sequence with respect to the decoded text and the speech text, and a second probability distribution of the visual encoding vector sequence with respect to the decoded text and the cued speech image sequence;
determining a third probability distribution of the speech text with respect to the cued speech image sequence; and
determining, in a case that a target language of a speech generation task of the first speech generation model is different from a source language, a fourth probability distribution of the decoded text with respect to the cued speech image sequence; and
the determining a target loss based on the probability distributions comprises:
determining a difference between the first probability distribution and the second probability distribution as a first sub-target loss;
determining a second sub-target loss negatively correlated with the third probability distribution;
determining a third sub-target loss negatively correlated with the fourth probability distribution; and
fusing the first sub-target loss, the second sub-target loss, and the third sub-target loss to obtain a first target loss.

6. The method according to claim 5, wherein the determining a first probability distribution of the text encoding vector sequence with respect to the decoded text and the speech text comprises:
determining, by a pre-trained first probability distribution model, the first probability distribution of the text encoding vector sequence with respect to the decoded text and the speech text, the first probability distribution model being trained by:
acquiring first sample data, the first sample data comprising a sample decoded text, a sample speech text, and a reference probability distribution of a sample text encoding vector sequence with respect to the sample decoded text and the sample speech text;
inputting the sample decoded text, the sample speech text, and the sample text encoding vector sequence to an initialized first probability distribution model, and outputting a predicted probability distribution of the text encoding vector sequence with respect to the sample decoded text and the sample speech text;
determining a loss value based on a difference between the predicted probability distribution and the reference probability distribution; and
updating parameters of the first probability distribution model according to the loss value.

7. The method according to claim 5, wherein the updating parameters of the decoder and at least one of the plurality of encoders based on the target loss comprises:
updating parameters of the visual encoder based on the first sub-target loss; and
updating parameters of the visual encoder and the decoder based on the second sub-target loss and the third sub-target loss.

8. The method according to any one of claims 2 to 4, wherein
the first speech generation model is a pre-trained speech recognition model, and after pre-training, a representation space of the text modality and a representation space of a speech modality of the first speech generation model have been unified into a common representation space; and
before the decoding, by the decoder, the multimodal encoding vector sequence to generate a decoded text, the method further comprises:
mapping the visual encoding vector sequence and the text encoding vector sequence into the common representation space to generate respective vector sequence representations of the visual encoding vector sequence and the text encoding vector sequence; and
adjusting a length of the vector sequence representation of the visual encoding vector sequence to be equal to a length of the vector sequence representation of the text encoding vector sequence.

9. The method according to any one of claims 2 to 4, wherein when the plurality of modalities further comprise a speech modality, the sample data of the plurality of modalities further comprises a speech signal feature of the speech modality; and
the encoding, by the plurality of encoders, the cued speech image sequence and the speech text to generate a multimodal encoding vector sequence further comprises:
encoding, by a speech encoder of the plurality of encoders, the speech signal feature to obtain a speech encoding vector sequence of the speech modality, the speech encoder corresponding to the speech modality; and
using the visual encoding vector sequence, the text encoding vector sequence, and the speech encoding vector sequence as a second multimodal encoding vector sequence, the second multimodal encoding vector sequence being in place of the first multimodal encoding vector sequence for decoding by the decoder.

10. The method according to claim 9, wherein the determining probability distributions of the decoded text and the sample data of the plurality of modalities comprises:
determining a fifth probability distribution of the text encoding vector sequence with respect to the decoded text and the speech text, and a sixth probability distribution of the speech encoding vector sequence with respect to the decoded text and the speech signal feature;
determining a seventh probability distribution of the speech text with respect to the speech signal feature; and
determining, in a case that a target language of a speech generation task of the first speech generation model is different from a source language, an eighth probability distribution of the decoded text with respect to the speech signal feature; and
the determining a target loss based on the probability distributions comprises:
determining a difference between the fifth probability distribution and the sixth probability distribution as a fourth sub-target loss;
determining a fifth sub-target loss negatively correlated with the seventh probability distribution;
determining a sixth sub-target loss negatively correlated with the eighth probability distribution; and
fusing the fourth sub-target loss, the fifth sub-target loss, and the sixth sub-target loss to obtain a second target loss.

11. The method according to claim 10, wherein the updating parameters of the decoder and at least one of the plurality of encoders based on the target loss comprises:
updating parameters of the speech encoder based on the fourth sub-target loss; and
updating parameters of the speech encoder and the decoder based on the fifth sub-target loss and the sixth sub-target loss.

12. The method according to any one of claims 1 to 11, wherein when the plurality of modalities further comprise a speech modality, the encoding, by the plurality of encoders, the cued speech image sequence and the speech text to generate a multimodal encoding vector sequence comprises:
encoding, by the plurality of encoders, the cued speech image sequence and the speech text to obtain the visual encoding vector sequence of the visual modality, the text encoding vector sequence of the text modality, and the speech encoding vector sequence of the speech modality;
performing feature concatenation on the visual encoding vector sequence and the speech encoding vector sequence to obtain a concatenated encoding vector sequence;
performing feature mapping on the concatenated encoding vector sequence to obtain a fused encoding vector sequence; and
using the fused encoding vector sequence and the text encoding vector sequence as a third multimodal encoding vector sequence, the third multimodal encoding vector sequence being in place of the second multimodal encoding vector sequence for decoding by the decoder.

13. The method according to claim 12, wherein the sample data of the plurality of modalities further comprises a speech signal feature of the speech modality; and
the encoding, by the plurality of encoders, the cued speech image sequence and the speech text to obtain the visual encoding vector sequence of the visual modality, the text encoding vector sequence of the text modality, and the speech encoding vector sequence of the speech modality comprises:
encoding, by a visual encoder of the plurality of encoders, the cued speech image sequence to obtain the visual encoding vector sequence of the visual modality, the visual encoder corresponding to the visual modality;
encoding, by a text encoder of the plurality of encoders, a plurality of morphemes in the speech text respectively to obtain the text encoding vector sequence of the text modality, the text encoding vector sequence comprising the text encoding vectors respectively corresponding to the plurality of morphemes, and the text encoder corresponding to the text modality; and
encoding, by a speech encoder of the plurality of encoders, the speech signal feature to obtain the speech encoding vector sequence of the speech modality, the speech encoder corresponding to the speech modality.

14. The method according to claim 12, wherein the determining probability distributions of the decoded text and the sample data of the plurality of modalities comprises:
determining a ninth probability distribution of the text encoding vector sequence with respect to the decoded text and the speech text, and a tenth probability distribution of the fused encoding vector sequence with respect to the decoded text, the cued speech image sequence, and the speech signal feature;
determining an eleventh probability distribution of the speech text with respect to the cued speech image sequence and the speech signal feature; and
determining, in a case that the target language of the speech generation task of the first speech generation model is different from the source language, a twelfth probability distribution of the decoded text with respect to the cued speech image sequence and the speech signal feature; and
the determining a target loss based on the probability distributions comprises:
determining a difference between the ninth probability distribution and the tenth probability distribution as a seventh sub-target loss;
determining an eighth sub-target loss negatively correlated with the eleventh probability distribution;
determining a ninth sub-target loss negatively correlated with the twelfth probability distribution; and
fusing the seventh sub-target loss, the eighth sub-target loss, and the ninth sub-target loss to obtain a third target loss.

15. The method according to claim 14, wherein the updating parameters of the decoder and at least one of the plurality of encoders based on the target loss comprises:
updating parameters of the visual encoder and the speech encoder based on the seventh sub-target loss; and
updating parameters of the visual encoder, the speech encoder, and the decoder based on the eighth sub-target loss and the ninth sub-target loss.

16. The method according to any one of claims 1 to 14, wherein
the first speech generation model further comprises a speech signal generator, wherein the speech signal generator, the decoder and the plurality of updated encoders form a second speech generation model, and the second speech generation model is configured to generate a speech signal.

17. A speech generation method for a speech generation model, executable by an electronic device, the speech generation model being the second speech generation model according to any one of claims 1 to 16 and the method comprising:
acquiring a cued speech image sequence of a target object; and
invoking, based on the cued speech image sequence, the second speech generation model to generate target speech text corresponding to the cued speech image sequence of the target object.

18. An apparatus for training a speech generation model, the apparatus comprising:
an acquisition module, configured to acquire a first speech generation model comprising a decoder and a plurality of encoders each corresponding to a respective modality of a plurality of modalities; and acquire sample data of the plurality of modalities, the sample data comprising a cued speech image sequence of a sample object and a speech text corresponding to the cued speech image sequence;
an encoding module, configured to encode, through the plurality of encoders, the cued speech image sequence and the speech text to generate a multimodal encoding vector sequence;
a decoding module, configured to decode, through the decoder, the multimodal encoding vector sequence to generate a decoded text;
a determination module, configured to determine probability distributions of the decoded text and the sample data of the plurality of modalities, and determine a target loss based on the probability distributions; and
a generation module, configured to update parameters of the decoder and at least one of the plurality of encoders based on the target loss to obtain an updated decoder and a plurality of updated encoders, the updated decoder and the plurality of updated encoders forming a second speech generation model.

19. A speech generation apparatus, the apparatus comprising:
an acquisition module, configured to acquire a cued speech image sequence of a target object; and
a generation module, configured to invoke, based on the cued speech image sequence, a speech generation model to generate target speech text corresponding to the cued speech image sequence of the target object, the speech generation model being the second speech generation model according to any one of claims 1 to 16.

20. An electronic device, comprising:
a memory, configured to store computer-executable instructions; and
a processor, configured to, when executing the computer-executable instructions stored in the memory, implement the method for training the speech generation model according to any one of claims 1 to 16, or the speech generation method for the speech generation model according to claim 17.

21. A computer-readable storage medium, having a computer-executable instruction or a computer program stored therein, the computer-executable instruction or the computer program, when executed by a processor, implementing the method for training the speech generation model according to any one of claims 1 to 16, or the speech generation method for the speech generation model according to claim 17.

22. A computer program product, comprising a computer-executable instruction or a computer program, the computer-executable instruction or the computer program, when executed by a processor, implementing the method for training the speech generation model according to any one of claims 1 to 16, or the speech generation method for the speech generation model according to claim 17.
